# EUROPEAN PATENT APPLICATION

(11) **EP 2 287 956 A1**
(43) Date of publication of application: **23.02.2011**
(21) Application number: 09746651.0
(22) Date of filing: 14.05.2009
(51) Int. Cl.: H01M 8/16, C12M 1/34, G01N 27/327, H01M 4/88, H01M 4/90, H01M 8/02, H01M 8/10

(54) **FUEL CELL, METHOD FOR PRODUCTION OF FUEL CELL, ELECTRONIC DEVICE, ENZYME-IMMOBILIZED ELECTRODE, BIOSENSOR, BIOREACTOR, ENERGY CONVERSION ELEMENT, AND ENZYMATIC REACTION-UTILIZING APPARATUS**

(30) Priority: 15.05.2008 JP 2008127888
(71) Applicant: Sony Corporation, Tokyo 108-0075 (JP)
(72) Inventor: MATSUMOTO, Ryuhei, Tokyo 108-0075 (JP); KAKUTA, Masaya, Tokyo 108-0075 (JP); SAKAI, Hideki, Tokyo 108-0075 (JP); TOKITA, Yuichi, Tokyo 108-0075 (JP)
(74) Representative: Müller - Hoffmann & Partner
(86) International application number: PCT/JP2009/059003
(87) International publication number: WO 2009/139445

(57) **Abstract**

A fuel cell and a method for manufacturing the same are provided, wherein at least one type of enzyme and coenzyme are confined in a minute space, an enzyme reaction is effected while this space serves as a reaction field and, thereby, electrons can be taken out of the fuel efficiently to generate electrical energy, and immobilization of these enzyme and coenzyme on an electrode can be performed easily. The enzyme and the coenzyme required for an enzyme reaction are encapsulated in a liposome 12, and the resulting liposome 12 is immobilized on the surface of an electrode 11 formed from porous carbon or the like so as to form an enzyme immobilization electrode. A transporter is incorporated in the liposome 12, as necessary. An electron mediator is also immobilized on the surface of the electrode 11. The resulting enzyme immobilization electrode is used as, for example, a negative electrode of a biofuel cell.

## Description

### Technical Field

The present invention relates to a fuel cell, a method for manufacturing a fuel cell, an electronic apparatus, an enzyme immobilization electrode, a biosensor, a bioreactor, an energy conversion element, and an enzyme reaction-utilizing apparatus. For example, the present invention is favorably applied to a biofuel cell, a biosensor, and a bioreactor, in which an enzyme is used, as well as various electronic apparatuses in which the biofuel is used as a power supply.

### Background Art

The fuel cell has a structure, in which a positive electrode (oxidant electrode) and a negative electrode (fuel electrode) are opposed with an electrolyte (proton conductor) therebetween. Regarding the fuel cell in the related art, a fuel (hydrogen) supplied to a negative electrode is oxidized so as to be separated into electrons and protons (H⁺). The electron is passed to the negative electrode, and H⁺ moves to the positive electrode through the electrolyte. Regarding the positive electrode, the resulting H⁺ reacts with oxygen supplied from the outside and the electron transferred from the negative electrode through an external circuit, so as to generate H₂O.

As described above, the fuel cell is a high-efficiency power generator to convert chemical energy held by the fuel to electrical energy directly, and chemical energy held by fossil energy of a natural gas, petroleum, coal, or the like can be taken out as electrical energy regardless of the place of usage and the time of usage at a high conversion efficiency besides. Consequently, research and development of the fuel cell for purposes of large-scale power generation and the like have been previously actively performed. For example, there is a track record of mounting the fuel cell on a space shuttle and verifying that an electric power and, at the same time, water for a crew can be supplied and the fuel cell is a clean power generator.

Furthermore, in recent years, fuel cells, such as solid polymer fuel cells, having relatively low operation temperatures within a temperature range of about room temperature to 90°C have been developed and noted. Consequently, applications not only for the purposes of large-scale power generation, but also to small systems, e.g., power supplies for driving automobiles and portable power supplies for personal computers and mobile devices, have been groped.

As described above, the fuel cell is expected to have a wide variety of applications from large-scale power generation to small-scale power generation and have been received widespread attention as a high-efficiency power generator. However, regarding the fuel cell, usually, a natural gas, petroleum, coal, or the like is used as a fuel by being converted to a hydrogen gas with a reformer or the like, and there are various problems in that, for example, limited resources are consumed and, in addition, heating to high temperatures is required and expensive noble metal catalysts, e.g., platinum (Pt), are required. Moreover, even in the case where a hydrogen gas or methanol is used as a fuel directly, it is necessary to exercise caution in handling them.

Then, it has been noted that living body metabolism performed in living things is a high-efficiency energy conversion mechanism, and application thereof to the fuel cell has been proposed. The living body metabolism referred to here includes breathing performed in microbial somatic cells, photosynthesis, and the like. The living body metabolism has advantageous, in combination, that the power generation efficiency is very high and the reaction proceeds under a mild condition on the order of room temperature.

For example, the breathing is a mechanism in which nutrients, e.g., saccharides, fats, and proteins, are taken into microbes or cells, the chemical energy thereof is converted to oxidation-reduction energy, that is, electrical energy, by reducing nicotinamide adenine dinucleotide (NAD⁺) to reduced nicotinamide adenine dinucleotide (NADH) in a process for generating carbon dioxide (CO₂) through a glycolytic pathway and a tricarboxylic acid (TCA) cycle including many enzyme reaction steps and, furthermore, in an electron transfer system, the electrical energy of these NADH is converted to the electrical energy of a proton gradient directly and, in addition, oxygen is reduced, so as to generate water. The electrical energy obtained here generates adenosine triphosphate (ATP) from adenosine diphosphate (ADP) through an ATP-synthesizing enzyme, and the resulting ATP is used for a reaction required for growing microbes and cells. The above-described energy conversion is performed in cytosols and mitochondria.

Furthermore, the photosynthesis is a mechanism in which water is oxidized so as to generate oxygen in a process for taking in and converting light energy to electrical energy by reducing nicotinamide adenine dinucleotide phosphate (NADP⁺) to reduced nicotinamide adenine dinucleotide phosphate (NADPH) through an electron transfer system. The resulting electrical energy takes in CO₂, is used for a carbon immobilization reaction, and is used for synthesis of carbohydrates.

As for a technology to use the above-described living body metabolism for a fuel cell, a microbial cell has been reported, in which electrical energy generated in microbes is taken out of the microbes through an electron mediator and the resulting electrons are passed to an electrode so as to obtain a current (refer to PTL 1, for example).

However, regarding microbes and cells, many unnecessary reactions are present besides the desired reaction, that is, conversion of chemical energy to electrical energy. Therefore, in the above-described method, the chemical energy is consumed in undesired reactions and satisfactory energy conversion efficiency is not exhibited.

Then, a fuel cell (biofuel cell) has been proposed, in which only a desired reaction is performed by using an enzyme (refer to PTLs 2 to 11, for example). This biofuel cell decomposes a fuel by using an enzyme to separate the fuel into protons and electrons. Biofuel cells by using alcohols, e.g., methanol and ethanol, monosaccharides, e.g., glucose, or polysaccharides, e.g., starch, as fuels have been developed.

It is known that immobilization ·arrangement of the enzyme relative to the electrode is very important in the above-described biofuel cell. Furthermore, it is known that effective presence of an electron mediator, which performs the function to transfer the electron, together with the enzyme is also necessary. There are various methods for immobilizing the enzyme in the related art. Among them, the present inventors have developed predominantly a polyion complex method, in which appropriate proportions of a polymer assuming a positive charge, a polymer assuming a negative charge, and an enzyme are mixed and applied to an electrode formed from porous carbon or the like so as to stabilize an immobilization film while the adhesion to the electrode is maintained, and a glutaraldehyde method.

### Citation List

### Patent Literature

PTL 1: Japanese Unexamined Patent Application Publication No. 2000-133297
PTL 2: Japanese Unexamined Patent Application Publication No. 2003-282124
PTL 3: Japanese Unexamined Patent Application Publication No. 2004-71559
PTL 4: Japanese Unexamined Patent Application Publication No. 2005-13210
PTL 5: Japanese Unexamined Patent Application Publication No. 2005-310613
PTL 6: Japanese Unexamined Patent Application Publication No. 2006-24555
PTL 7: Japanese Unexamined Patent Application Publication No. 2006-49215
PTL 8: Japanese Unexamined Patent Application Publication No. 2006-93090
PTL 9: Japanese Unexamined Patent Application Publication No. 2006-127957
PTL 10: Japanese Unexamined Patent Application Publication No. 2006-156354
PTL 11: Japanese Unexamined Patent Application Publication No. 2007-12281

### Non Patent Literature

NPL 1: Riposo-mu Ouyou no Shintenkai "Jinkousaibou no Kaihatsu ni Mukete" (New Development in Liposome Application "For Development of Artificial Cell") supervised by Kazunari Akiyoshi and Kaoru Tsujii, NTS Inc., issued on June 1, 2005
NPL 2: Biotechnology and Bioengineering, Vol. 81, No. 6, pp. 695-704 (2003)

### Summary of Invention

### Technical Problem

However, the above-described immobilization method by using the polyion complex depends on the physicochemical properties, particularly a charge, of the enzyme to a great extent, and it is feared that the state of immobilization changes continuously because of a change in an external solution, an environmental change during use, and the like, so that immobilized enzyme and the like are eluted easily. Moreover, in general, the resistance of the enzyme to heat is low. The physicochemical properties of the enzyme in itself are changed in modification of the enzyme toward commercialization of the biofuel cell. Therefore, as occasion demands, it is necessary to optimize the immobilization film manufacturing method, which is complicated. In addition, in the case where it is desired to take out more electrons from the fuel, larger amounts of enzymes are required. In the case where these enzymes are immobilized, much effort is expended to optimize the immobilization condition thereof.

Accordingly, it is an issue to be solved by the present invention to provide a fuel cell and a method for manufacturing the same, wherein at least one type of enzyme and coenzyme are confined in a minute space, an enzyme reaction is effected while this space serves as a reaction field and, thereby, electrons can be taken out of the fuel efficiently to generate electrical energy, and immobilization of these enzyme and coenzyme on the electrode can be performed easily, a high-performance electronic apparatus including this fuel cell, an enzyme immobilization electrode favorably applied to this fuel cell, as well as a high-efficiency biosensor, a bioreactor, an energy conversion element, and an electrode reaction-utilizing apparatus. Solution to Problem

The present inventors performed intensive research to solve the above-described problems. As a result, it was found that in a biofuel cell, in the case where an enzyme and a coenzyme required for an enzyme reaction were encapsulated in a liposome serving as an artificial cell, the enzyme reaction was able to be effected much more efficiently so as to obtain a very high catalytic current or facilitate immobilization on an electrode as compared with those in the case where the same amounts of enzyme and coenzyme were used without being encapsulated in a liposome. The effectiveness thereof was ascertained by experiments and, furthermore, the range in which this technique was able to be applied was examined from various viewpoints, and the present invention has been made. In this regard, the resulting technique can be favorably applied to not only biofuel cells, but also various elements or apparatuses in which enzymes and coenzymes are used.

The finding that the enzyme reaction can be effected much more efficiently by encapsulating the enzyme and the coenzyme required for the enzyme reaction in the liposome and a very high catalytic current can be achieved have been obtained by the present inventors originally and has disproved an established theory in the related art. That is, in the case where the enzyme encapsulated in the liposome is assumed to be a living body catalyst, it has been believed that the reaction rate is low because the permeation rate of a substrate with respect to a lipid double layer constituting the liposome is restricted. For example, according to the description in lines 2 to 6 of the right column in page 454 of NPL 1, "regarding the use of the enzyme encapsulated in the liposome as a living body catalyst, there is a problem in that the reactivity of the enzyme encapsulated in the liposome with the hydrophilic or high-molecular weight substrate added to the water phase outside the liposome is excessively restricted because of high permeation selectivity of the lipid membrane". Furthermore, according to the description in line 8 from the bottom to line 5 from the bottom of the right column in page 695 of NPL 2, "in general, the reactivity of the enzyme encapsulated in the liposome with the substrate added from the outside depends on the substrate permeability across the liposome double layer significantly".

That is, in order to solve the above-described problems, a first invention is
a fuel cell having a structure in which a positive electrode and a negative electrode are opposed with a proton conductor therebetween and being configured to take electrons out of a fuel by using an enzyme and a coenzyme,
wherein at least one type of the above-described enzyme and at least one type of the above-described coenzyme are encapsulated in a liposome.

A second invention is
a method for manufacturing a fuel cell having a structure in which a positive electrode and a negative electrode are opposed with a proton conductor therebetween and taking electrons out of a fuel by using an enzyme and a coenzyme, the method including the step of encapsulating at least one type of the above-described enzyme and at least one type of the above-described coenzyme in a liposome.

In the first and the second inventions, the liposome is a closed vesicle formed from a lipid double layer composed of phospholipid or the like, and the inside is a water phase. This liposome includes not only a unilamellar liposome formed from a single layer of lipid double layer (SUV: small unilamellar liposome, GUV: giant unilamellar liposome), but also a multilamellar liposome (MUV) in which a small liposome (SUV) is taken into a giant liposome (GUV) to form a nest. The liposome having a diameter of, for example, about 100 nm to a large 10 µm can be produced. The diameter is selected as necessary, and is 2 to 7 µm in a specific example. As for the phospholipid, basically any phospholipid may be used, and either glycerophospholipid or sphingophospholipid may be used. Examples of glycerophospholipids include phosphatidic acid, phosphatidyl choline (lecithin), phosphatidyl ethanolamine, phosphatidyl serine, phosphatidyl glycerol, and diphosphatidyl glycerol (cardiolipin), although not limited to them. Examples of sphingophospholipids include sphingomyelin, although not limited to this. A typical example of phosphatidyl choline is dimyristoyl phosphatidyl choline (DMPC). Previously known methods can be used for formation of the liposome and encapsulation of the enzyme and the coenzyme into the inside of the liposome.

Among the enzymes and the coenzymes required for the enzyme reaction, at least one type of enzyme and at least one type of coenzyme are encapsulated in this liposome. However, all the enzymes and the coenzymes required for the enzyme reaction may be encapsulated in the liposome, or a part of the enzymes and the coenzymes are not encapsulated in the liposome, but may be incorporated or immobilized into a lipid double layer constituting this liposome or be allowed to present outside the liposome. In the case where the enzymes and the coenzymes are immobilized into the lipid double layer constituting the liposome, for example, an anchor, e.g., a polyethylene glycol chain, can be used.

In the case where the fuel used is not easily passed through the lipid double layer constituting the liposome and taken into the inside of the liposome, a transporter which performs transportation of the fuel or decomposition products of the fuel (transport protein) can be incorporated in the lipid double layer. Alternatively, the permeability of the fuel can also be improved by selecting the type of the lipid, the composition, the particle diameter, and the like appropriately.

It is favorable that the liposome is immobilized on the negative electrode, although not necessarily immobilized. In the case where an electrolyte containing a buffer solution (buffer substance) is used as the proton conductor, the liposome may be contained in the buffer solution. As for immobilization of the liposome, previously known various immobilization methods used for, for example, immobilization of a cell can be used. Furthermore, in this case, in order to stabilize the immobilization of the liposome on the negative electrode, an intermediate layer may be disposed between the negative electrode and the liposome. As for this intermediate layer, not only biopolymers, e.g., proteins and DNA, but also polymer electrolytes having both properties of hydrophilicity and hydrophobicity, materials capable of forming structures, e.g., micelles, reversed micelles, and lamellae, and compounds having nanometer structures and having at least one property, the compounds exhibiting biocompatibility, can be used. As for the protein, for example, acidic proteins, e.g., alcohol dehydrogenase, lactate dehydrogenase, ovalbumin, and myokinase, typified by albumin and, in addition, lysozyme, cytochrome c, myoglobin, trypsinogen, and the like having isoelectric points on the alkaline side can be used. The liposome can be immobilized on the negative electrode stably by allowing an electrode surface to adsorb physically the intermediate layer formed from these proteins and the like and immobilizing the liposome on this intermediate layer.

As for the fuel (substrate), various substances can be used and are selected as necessary. Typical examples thereof include alcohols, e.g., methanol and ethanol, monosaccharides, and polysaccharides. In the case where monosaccharides, polysaccharides, and the like are used as the fuel, typically, they are used in the form of a fuel solution in which they are dissolved in a previously known buffer solution, e.g., a phosphate buffer solution or a Tris buffer solution.

Examples of combinations of the substrate and the enzyme are as shown in Table 1.

**[Table 1]**

| Substrate | Enzyme |
|---|---|
| glucose | glucose dehydrogenase |
| | glucose oxidase |
| alcohol | alcohol dehydrogenase |
| aldehyde | aldehyde dehydrogenase |
| histidine | histidinol dehydrogenase |
| isocitric acid | isocitrate dehydrogenase |
| ketoglutaric acid | ketoglutarate dehydrogenase |
| malic acid | malate dehydrogenase |
| succinic acid | succinate dehydrogenase |
| glucose-6-phosphate | glucose-6-phosphate dehydrogenase |
| 6-phosphogluconate | 6-phosphogluconate dehydrogenase |
| fructose | fructose dehydrogenase |

The enzyme encapsulated in the liposome contains typically an oxidation enzyme which facilitate oxidation of the fuel so as to decompose and further contains a coenzyme-oxidizing enzyme which returns the coenzyme reduced along with oxidation of the fuel to an oxidized form and, in addition, which passes electrons to the negative electrode through the electron mediator.

As for the electron mediator, basically, any compound may be used. Preferably, compounds having a quinone skeleton are used. Specifically, for example, 2,3-dimethoxy-5-methyl-1,4-benzoquinone (Q0) and compounds having a naphthoquinone skeleton, e.g., various naphthoquinone derivatives, such as 2-amino-1,4-naphthoquinone (ANQ), 2-amino-3-methyl-1,4-naphthoquinone (AMNQ), 2-methyl-1,4-naphthoquinone (VK3), 2-amino-3-carboxy-1,4-naphthoquinone (ACNQ), and vitamin K1, are used. As for the compounds having a quinone skeleton, for example, anthraquinone and derivatives thereof can also be used. The electron mediator may contain at least one type of other compounds serving as the electron mediator, if necessary, besides the compounds having a quinone skeleton. This electron mediator may be immobilized on the negative electrode together with the liposome encapsulating the enzyme and the coenzyme therein, be encapsulated in the inside of this liposome, or be immobilized on this liposome, or be contained in the fuel solution.

For example, in the case where the alcohol is used as the fuel, the enzyme encapsulated in the liposome includes an oxidation enzyme which facilitates oxidation of the alcohol so as to decompose and a coenzyme-oxidizing enzyme which returns the coenzyme reduced by the oxidation enzyme to an oxidized form. Electrons are generated when the coenzyme is returned to the oxidized form by the action of the coenzyme-oxidizing enzyme, and electrons are passed from the coenzyme-oxidizing enzyme through the electron mediator to the negative electrode. As for the oxidation enzyme, for example, alcohol dehydrogenase (ADH) (in particular, NAD-dependent alcohol dehydrogenase) is used. As for the coenzyme, for example, nicotinamide adenine dinucleotide (NAD⁺) or nicotinamide adenine dinucleotide phosphate (NADP⁺) is used. As for the coenzyme-oxidizing enzyme, for example, diaphorase (DI) is used.

Alternatively, in the case where the monosaccharide, e.g., glucose, is used as the fuel, it is favorable that the enzyme encapsulated in the liposome includes an oxidation enzyme which facilitates oxidation of the monosaccharide so as to decompose and a coenzyme-oxidizing enzyme which returns the coenzyme reduced by the oxidation enzyme to an oxidized form. Electrons are generated when the coenzyme is returned to the oxidized form by the action of the coenzyme-oxidizing enzyme, and electrons are passed from the coenzyme-oxidizing enzyme through the electron mediator to the negative electrode. As for the oxidation enzyme, for example, glucose dehydrogenase (GDH) (in particular, NAD-dependent glucose dehydrogenase) is used. As for the coenzyme, for example, NAD⁺ or NADP⁺ is used. As for the coenzyme-oxidizing enzyme, for example, DI is used. In this case, in order to take glucose into the inside of the liposome, it is favorable that a glucose transporter (saccharide carrier) is incorporated in the lipid double layer constituting the liposome. As for the glucose transporter, previously known various substances can be used and are selected as necessary. For example, in the case where glucose is transported through a facilitated diffusion (enhanced diffusion) mechanism on the basis of a difference in glucose concentration between the inside and the outside of the liposome, six types of isoforms of GLUT 1 to GLUT 6 and variants thereof can be used as a glucose transporter having a responsibility for facilitated diffusion.

In the case where polysaccharides (referring to polysaccharides in a broad sense, referring to all carbohydrates which generate at least two molecules of monosaccharide through hydrolysis, and including oligosaccharides, e.g., disaccharides, trisaccharides, and tetrasaccharides) are used, a decomposition enzyme which facilitates decomposition, e.g., hydrolysis, of a polysaccharide and generates a monosaccharide, e.g., glucose, is also used in addition to the above-described oxidizing enzyme, coenzyme-oxidizing enzyme, and coenzyme. In this case, for example, the above-described oxidizing enzyme, coenzyme-oxidizing enzyme, and coenzyme are encapsulated in the liposome, and the decomposition enzyme is incorporated or immobilized into a lipid double layer constituting the liposome or is allowed to present outside the liposome. In the case where the decomposition enzyme is allowed to present outside the liposome, it is favorable that the decomposition enzyme is immobilized on the negative electrode, although not necessarily immobilized, but may be contained in a buffer solution in the case where an electrolyte containing the buffer solution (buffer substance) is used as a proton conductor. Specific examples of polysaccharides include starch, amylose, amylopectin, glycogen, cellulose, maltose, sucrose, and lactose. They are composed of at least two monosaccharide bonded, and all polysaccharides include glucose as a monosaccharide serving as a bonding unit. In this regard, amylose and amylopectin are components contained in starch. Starch is a mixture of amylose and amylopectin. In the case where glucoamylase is used as a decomposition enzyme for a polysaccharide and glucose dehydrogenase is used as an oxidation enzyme for decomposing a monosaccharide, power generation can be performed by using a fuel containing a polysaccharide which can be decomposed to glucose by glucoamylase, for example, any one of starch, amylose, amylopectin, glycogen, and maltose. In this regard, glucoamylase is a decomposition enzyme which hydrolyzes α-glucan, e.g., starch, to generate glucose and glucose dehydrogenase is an oxidation enzyme which oxidizes β-D-glucose to D-glucono-δ-lactone.

Regarding the fuel cell, in which cellulase is used as the decomposition enzyme and glucose dehydrogenase is used as the oxidation enzyme, cellulose which can be decomposed to glucose by cellulase can be used as the fuel. For more details, cellulase is at least any one type of cellulase (EC 3.2.1.4), exo-cellobiohydrolase (EC 3.2.1.91), β-glucosidase (EC 3.2.1.21), and the like. Furthermore, a mixture of glucoamylase and cellulase may be used as a decomposition enzyme. In this case, since most of polysaccharides produced in the natural world can be decomposed, substances containing them to a large extent, for example, garbage, can be used as fuels.

Furthermore, regarding the fuel cell, in which α-glucosidase is used as the decomposition enzyme and glucose dehydrogenase is used as the oxidation enzyme, maltose which is decomposed to glucose by α-glucosidase can be used as the fuel.

Moreover, regarding the fuel cell, in which sucrase is used as the decomposition enzyme and glucose dehydrogenase is used as the oxidation enzyme, sucrose which is decomposed to glucose and fructose by sucrase can be used as the fuel. For more details, sucrase is at least any one type of α-glucosidase (EC 3.2.1.20), sucrose-α-glucosidase (EC 3.2.1.48), β-fructofuranosidase (EC 3.2.1.26), and the like.

In addition, regarding the fuel cell, in which β-galactosidase is used as the decomposition enzyme and glucose dehydrogenase is used as the oxidation enzyme, lactose which is decomposed to glucose and galactose by β-galactosidase can be used as the fuel.

If necessary, these polysaccharides serving as the fuel may also be immobilized on the negative electrode.

In particular, regarding the fuel cell by using starch as the fuel, a gelatious solidified fuel produced by gelatinizing starch can also be used. In this case, for example, a method can be employed, wherein gelatinized starch is allowed to come into contact with a negative electrode, on which the liposome encapsulating the enzyme and the coenzyme therein have been immobilized, or is immobilized on the negative electrode together with this liposome and the like. If such a method is employed, the starch concentration on the negative electrode surface can be kept at a level higher than that in the case where starch dissolved in a solution is used, and the decomposition reaction by the enzyme is further accelerated, so that the output is improved. In addition, the handling of the fuel is easier than that in the case of the solution and, therefore, a fuel supply system can be simplified. Moreover, inhibition of turnover of the fuel cell is not necessary and, therefore, it is very advantageous to use the fuel cell in mobile apparatuses.

In the case where the enzyme is immobilized on the positive electrode, typically, this enzyme includes an enzyme which reduces oxygen. As for this enzyme which reduces oxygen, for example, bilirubin oxidase, laccase, and ascorbate oxidase can be used. In this case, preferably, the electron mediator besides the enzyme is also immobilized on the positive electrode. As for the electron mediator, for example, potassium hexacyanoferrate and potassium octacyanotungstate are used. Preferably, the electron mediator is immobilized at an adequately high concentration, for example, at an average value of 0.64 x 10⁻⁶ mol/mm² or more.

As for the proton conductor, various substances can be used and selected as necessary. Specific examples thereof include substances formed from cellophane, perfluorocarbon sulfonate (PFS) based resin films, copolymer films of trifluorostyrene derivatives, phosphoric acid-impregnated polybenzimidazole films, aromatic polyether ketone sulfonic acid films, PSSA-PVA (polystyrenesulfonic acid polyvinyl alcohol copolymer), PSSA-EVOH (polystyrenesulfonic acid ethylene vinyl alcohol copolymer), and ion exchange resins having a fluorine-containing carbon sulfonic group (Nafion (trade name, DuPont, USA) and the like).

In the case where an electrolyte containing a buffer solution (buffer substance) is used as the proton conductor, it is desirable that a satisfactory buffer capacity can be obtained during a high output operation and the capacity intrinsic to the enzyme can be satisfactorily exerted. For this purpose, it is effective to specify the concentration of the buffer substance contained in the electrolyte to be 0.2 M or more, and 2.5 M or less, preferably 0.2 M or more, and 2 M or less, more preferably 0.4 M or more, and 2 M or less, and further preferably 0.8 M or more, and 1.2 M or less. In general, any buffer substance may be used insofar as pKₐ of 6 or more, and 9 or less is exhibited. Specific examples thereof include dihydrogenphosphate ion (H₂PO₄ ), 2-amino-2-hydroxymethyl-1,3-propanediol (abbreviated as Tris), 2-(N-morpholino)ethanesulfonic acid (MES), cacodylic acid, carbonic acid (H₂CO₃) hydrogen citrate ion, N-(2-acetamide)iminodiacetic acid (ADA), piperazine-N,N'-bis(2-ethanesufonic acid) (PIPES), N-(2-acetamido)-2-aminoethanesufonic acid (ACES), 3-(N-morpholino)propanesulfonic acid (MOPS), N-2-hydroxyethylpiperazine-N'-2-ethanesufonic acid (HEPES), N-2-hydroxyethylpiperazine-N'-3-propanesufonic acid (HEPPS), N-[tris(hydroxymethyl)methyl]glycine (abbreviated as tricine), glycylglycine, and N,N-bis(2-hydroxyethyl)glycine (abbreviated as bicine). A substance which generates dihydrogenphosphate ion (H₂PO₄) is, for example, sodium dihydrogenphosphate (NaH₂PO₄) or potassium dihydrogenphosphate (KH₂PO₄). As for the buffer substance, compounds having an imidazole ring is also preferable. Specific examples of the compounds having an imidazole ring include imidazole, triazole, pyridine derivatives, bipyridine derivatives, and imidazole derivatives (histidine, 1-methylimidazole, 2-methylimidazole, 4-methylimidazole, 2-ethylimidazole, ethyl imidazole-2-carboxylate, imidazole-2-carboxaldehyde, imidazole-4-carboxylic acid, imidazole-4,5-dicarboxylic acid, imidazol-1-yl-acetic acid, 2-acetylbenzimidazole, 1-acetylimidazole, N-acetylimidazole, 2-aminobenzimidazole, N-(3-aminopropyl)imidazole, 5-amino-2-(trifluoromethyl)benzimidazole, 4-azabenzimidazole, 4-aza-2-mercaptobenzimidazole, benzimidazole, 1-benzylimidazole, and 1-butylimidazole). As necessary, in addition to these buffer substances, for example, at least one type of acid selected from the group consisting of hydrochloric acid (HCl), acetic acid (CH₃COOH), phosphoric acid (H₃PO₄) and sulfuric acid (H₂SO₄ may be added as a neutralizer. Consequently, the activity of the enzyme can be maintained at a higher level. Preferably, the pH of the electrolyte containing the buffer substance is about 7, but may be any value of 1 to 14 in general.

As for the electrode material for the positive and negative electrodes, various materials can be used. For example, carbon based materials, e.g., porous carbon, carbon pellets, carbon felt, and carbon paper, are used. As for the material for the electrode, a porous electrically conductive material including a skeleton formed from a porous material and a material covering at least a part of the surface of the skeleton and containing a carbon based material as a primary component may also be used. This porous electrically conductive material can be obtained by coating at least a part of the surface of a skeleton formed from a porous material with a material containing a carbon based material as a primary component. The porous material constituting the skeleton of this porous electrically conductive material may be basically any material irrespective of the presence or absence of the electrical conductivity insofar as the skeleton can be maintained stably even if the porosity is high. Preferably, a material having a high porosity and high electrical conductivity is used as the porous material. As for the above-described porous material having a high porosity and high electrical conductivity, specifically, a metal material (metal or alloy), a carbon based material having a strengthened skeleton (brittleness is improved), or the like can be used. In the case where the metal material is used as the porous material, various choices are considered because the state stability of the metal material is different depending on the use environment, e.g., the pH of the solution and the potential. For example, a foam metal or a foam alloy, e.g., nickel, copper, silver, gold, nickel-chromium alloy, or stainless steel, is one of easily available materials. As for the porous material, resin materials (for example, sponge-like materials) can also be used besides the above-described metal materials and carbon based materials. The porosity and the pore diameter (minimum diameter of pore) of this porous material are determined in consideration of the thickness of the material, which is applied on the surface of the skeleton formed from this porous material and which contains the carbon based material as a primary component, and in accordance with the porosity and the pore diameter required of the porous electrically conductive material. In general, the pore diameter of this porous material is 10 nm to 1 mm, and typically 10 nm to 600 µm. On the other hand, as for the material covering the surface of the skeleton, it is necessary that a material having electrical conductivity and being stable at an assumed operation potential is used. As for the above-described material, here, a material containing a carbon based material as a primary component is used. In general, the carbon based materials have wide potential windows and most of them are chemically stable. Specifically, the materials containing the carbon based material as a primary component include materials formed from only carbon based materials and materials containing the carbon based material as a primary component and containing a very small amount of auxiliary materials selected in accordance with the characteristics and the like required of the porous electrically conductive material. Specific examples of the latter materials include materials having electrical conductivity improved by adding highly electrically conductive materials, e.g., metals, to carbon based materials and materials provided with functions other than the electrical conductivity by, for example, adding polytetrafluoroethylene based materials to carbon based materials to provide surface water repellency. There are various types of carbon based materials. However, any carbon based material may be employed. Not only carbon single substance, but also carbon blended with other elements may be employed. In particular, it is preferable that this carbon based material is a fine powder carbon material having high electrical conductivity and a high surface area. As for this carbon based material, specifically, for example, materials provided with high electrical conductivity, e.g., KB (Ketjen Black), and functional carbon materials, e.g., carbon nanotube and fullerene, can be used. As for the coating method of the material containing the carbon based material as a primary component, any coating method may be used insofar as the surface of the skeleton formed from a porous material can be coated by, for example, using an appropriate binder, as necessary. The size of the pore diameter of the porous electrically conductive material is selected in such a way that a solution containing a substrate and the like can come in and out through the pore and is 9 nm to 1 mm, 1 µm to 1 mm, or 1 to 600 µm in general. In the state in which at least a part of the surface of the skeleton formed from a porous material is covered with a material containing a carbon based material as a primary component or in the state in which at least a part of the surface of the skeleton formed from a porous material is coated with a material containing a carbon based material as a primary component, it is desirable that all pores are communicated with each other or an occurrence of plugging with materials containing the carbon based material as a primary component is prevented.

The whole configuration of this fuel cell is selected as necessary. For example, in the case where a coin type or button type configuration is employed, it is favorable that a positive electrode, an electrolyte, and a negative electrode are held in the inside of a space formed between a positive electrode collector having a structure capable of passing through an oxidant, and a negative electrode collector having a structure capable of passing through a fuel. In this case, typically, the space to hold the positive electrode, the electrolyte, and the negative electrode is formed by swaging an edge of one of the positive electrode collector and the negative electrode collector relative to the other of the positive electrode collector and the negative electrode collector with an insulating seal member therebetween, although not limited to this. This space may be formed by other working methods as necessary. The positive electrode collector and the negative electrode collector are electrically insulated from each other by the insulating seal member. As for this insulating seal member, typically, gaskets formed from various elastomers, e.g., silicone rubber, are used, although not limited to them. The two-dimensional shapes of these positive electrode collector and negative electrode collector can be selected as necessary and are, for example, a circle, an ellipse, a tetragon, a hexagon, and the like. Typically, the positive electrode collector has at least one oxidant supply hole and the negative electrode collector has at least one fuel supply hole, although not necessarily limited to this. For example, no oxidant supply hole may be disposed by using a positive electrode collector material capable of passing through an oxidant, and no fuel supply hole may be disposed by using a negative electrode collector material capable of passing through a fuel. The negative electrode collector has a fuel holding portion typically. This fuel holding portion may be disposed integrally with the negative electrode collector or be disposed in such a way as to be attached and detached to the negative electrode collector easily. Typically, the fuel holding portion has a lid for sealing hermetically. In this case, the fuel can be injected into the fuel holding portion by removing the lid. The fuel may be injected from the side surface or the like of the fuel holding portion without using the lid for sealing hermetically. In the case where the fuel holding portion is disposed in such a way as to be attached and detached to the negative electrode collector easily, for example, a fuel tank, a fuel cartridge, or the like filled with the fuel in advance may be attached as the fuel holding portion. These fuel tank and fuel cartridge may be a single-use type. However, it is preferable that the fuel can be filled therein from the viewpoint of facilitating effective use of resources. Moreover, the spent fuel tank or fuel cartridge may be exchanged with a fuel tank or fuel cartridge filled with the fuel. Furthermore, a fuel cell can be used continuously by, for example, forming a fuel holding portion into the shape of a hermetically sealed container having a fuel supply hole and a discharge hole and supplying a fuel from the outside into the hermetically sealed container through this supply hole continuously. Alternatively, no fuel holding portion is disposed in the fuel cell, and a fuel cell may be used while being floated with the negative electrode side down and the positive electrode side up on a fuel put in a fuel tank of open system.

This fuel cell may have a structure in which a negative electrode, an electrolyte, a positive electrode, and a positive electrode collector having a structure capable of passing through an oxidant are disposed around a predetermined center axis sequentially, and a negative electrode collector having a structure capable of passing through a fuel is disposed while being electrically connected to the negative electrode. In this fuel cell, the negative electrode may be in the shape of a cylinder having the cross-sectional shape of a circle, an ellipse, a polygon, or the like or be in the shape of a column having the cross-sectional shape of a circle, an ellipse, a polygon, or the like. In the case where the negative electrode is in the shape of a cylinder, the negative electrode collector may be disposed, for example, on the inside perimeter side of the negative electrode, be disposed between the negative electrode and the electrolyte, be disposed at least one end surface of the negative electrode, or furthermore be disposed on at least two thereof. Alternatively, the negative electrode may be configured to be able to hold a fuel, for example, the negative electrode may be formed from a porous material, and the resulting negative electrode may doubles as a fuel holding portion. Alternatively, a columnar fuel holding portion may be disposed on a predetermined center axis. For example, in the case where the negative electrode collector is disposed on the inside perimeter side of the negative electrode, this fuel holding portion may be a space in itself surrounded by the negative electrode collector, or be a container, e.g., a fuel tank or a fuel cartridge, disposed in this space separately from the negative electrode collector. The container may be attached and detached easily or be fixed. For example, the fuel holding portion is in the shape of a circular column, in the shape of an elliptical column, or in the shape of a polygonal column, e.g., a tetragonal or hexagonal, although not limited to this. The electrolyte may be formed into the shape of a bag-shaped container in such a way as to enveloping the whole of the negative electrode and the negative electrode collector. Consequently, in the case where the fuel holding portion is filled with a fuel, this fuel can be brought into contact with the whole of the negative electrode. At least a portion between the positive electrode and the negative electrode of this container may be formed from an electrolyte, and other portion may be formed from a material different from this electrolyte.
A fuel cell can be used continuously by making this container into a hermetically sealed container having a fuel supply hole and a discharge hole and supplying a fuel from the outside into the container through this supply hole continuously. Regarding the negative electrode, it is preferable that the porosity is large and, for example, it is preferable that the porosity is 60% or more in order that the fuel can be favorably sufficiently stored in the inside.

A pellet electrode can also be used as the positive electrode and the negative electrode. This pellet electrode can be formed by, for example, mixing a carbon based material (in particular, a fine powder carbon material having high electrical conductivity and a high surface area is preferable), specifically, for example, a material provided with high electrical conductivity, e.g., KB (Ketjen Black), a functional carbon material, e.g., carbon nanotube or fullerene, and the like and, as necessary, a binder, e.g., polyvinylidene fluoride, a powder of the above-described enzyme (or enzyme solution), a powder of the coenzyme (or coenzyme solution), a powder of the electron mediator (or an electron mediator solution), a powder of polymer for immobilization (or polymer solution), and the like with an agate mortar, performing drying appropriately, and pressing the resulting mixture into a predetermined shape. The thickness of this pellet electrode (electrode thickness) is determined as necessary and is, as an example, about 50 µm. For example, in the case where the coin type fuel cell is produced, a pellet electrode can be formed by pressing the above-described material for forming a pellet electrode into the shape of a circle (an example of diameter is 15 mm, although the diameter is not limited to this, but is determined as necessary) with a tablet producing machine. In the case where this pellet electrode is formed, in order to achieve a required electrode thickness, for example, the amount of carbon constituting the material for forming the pellet electrode, a pressing pressure, and the like are controlled. In the case where a positive electrode or a negative electrode is inserted into a coin type cell can, for example, it is preferable that a metal mesh spacer is inserted between these positive electrode or negative electrode and the cell can so as to ensure electrical contact therebetween.

As for the method for producing the pellet electrode, in addition to the above-described method, for example, a carbon based material, as necessary a binder and a mixed solution (aqueous or organic solvent mixed solution) of enzyme immobilization components (enzyme, coenzyme, electron mediator, polymer, and the like) may be applied to a current collector and the like appropriately, drying may be performed, the whole may be pressed and, thereafter, cutting into a desired electrode size may be performed.

This fuel cell can be used for all of those generally requiring an electric power regardless of size and be used for, for example, electronic apparatuses, mobile units (automobiles, two-wheeled vehicles, aircraft, rockets, spacecraft, and the like), power units, construction machinery, machine tools, power generation systems, cogeneration systems, and the like. The output, the size, the shape, the type of fuel, and the like are determined on the basis of the use and the like.

A third invention is
an electronic apparatus including
at least one fuel cell,
wherein at least one of the fuel cell
has a structure in which a positive electrode and a negative electrode are opposed with a proton conductor therebetween and is configured to take electrons out of a fuel by using an enzyme and a coenzyme, and
at least one type of the above-described enzyme and at least one type of the above-described coenzyme are encapsulated in a liposome.

This electronic apparatus may be of any type and includes both the portable type and the stationary type basically. Specific examples include cellular phones, mobile apparatuses (personal digital assistant (PDA) and the like), robots, personal computers (including both the desktop type and the note type), game machines, camera built-in VTR (video tape recorder), vehicle-mounted apparatuses, home appliances, and industrial products.

The explanations related to the first and the second inventions go for the third invention within the bounds of not impairing the features thereof.

A fourth invention is
an enzyme immobilization electrode, wherein a liposome encapsulating at least one type of enzyme and at least one type of coenzyme therein is immobilized.

The explanations related to the first and the second inventions go for the fourth invention within the bounds of not impairing the features thereof.

A fifth invention is
a biosensor,
wherein an enzyme and a coenzyme are used and
at least one type of the enzyme and at least one type of the coenzyme are encapsulated in a liposome.

A sixth invention is
a bioreactor,
wherein an enzyme and a coenzyme are used and
at least one type of the enzyme and at least one type of the coenzyme are encapsulated in a liposome.

A seventh invention is
an energy conversion element, wherein a liposome encapsulating at least one type of enzyme and at least one type of coenzyme therein is used.

Here, this energy conversion element is an element to convert the chemical energy held by a fuel or a substrate to electrical energy through an enzyme reaction, and the above-described fuel cell, that is, a biofuel cell, is one type of this energy conversion element.

An eighth invention is
an enzyme reaction-utilizing apparatus,
wherein an enzyme and a coenzyme are used and
at least one type of the enzyme and at least one type of the coenzyme are encapsulated in a liposome.

This enzyme reaction-utilizing apparatuses include a biosensor (a glucose sensor and the like), a bioreactor, and the like besides the above-described fuel cell, that is, the biofuel cell, and enzymes in accordance with the individual purposes are used.

The explanations related to the first and the second inventions go for the fifth to the eighth inventions within the bounds of not impairing the features thereof except those described above.

In the present invention having the above-described configuration, at least one enzyme and at least one coenzyme involved in the enzyme reaction are encapsulated in the liposome while keeping high activity. Therefore, a minute space in the inside of the liposome serves as a reaction field, and the enzyme reaction is effected efficiently, so that electrons can be taken out of the fuel or the substrate efficiently. In this case, the concentrations of the enzyme and the coenzyme encapsulated in the inside of the liposome are very high and, therefore, the mutual distance between the enzyme and the coenzyme is very small. Consequently, the catalyst cycle due to these enzyme and coenzyme proceeds at a very high speed, and the enzyme reaction proceeds at a high speed. Then, the enzyme or the coenzyme encapsulated in the inside of the liposome can be immobilized on the negative electrode or the electrode easily with the liposome therebetween by immobilizing this liposome on the negative electrode or the electrode, so that the electrons taken out of the fuel or the substrate can be passed to the negative electrode or the electrode reliably. In this case, the immobilization of the liposome can be performed simply as compared with the case where the enzyme and the coenzyme are immobilized by a polyion complex or the like.

### Advantageous Effects of Invention

According to the present invention, a high-efficiency fuel cell can be realized, wherein the enzyme reaction can be effected while a minute space in the inside of the liposome encapsulating the enzyme and the coenzyme therein serves as a reaction field, so that electrons can be taken out of the fuel or the substrate efficiently to generate electrical energy and, in addition, immobilization of these enzyme and coenzyme on the electrode can be performed easily. Furthermore, high-performance electronic apparatuses and the like can be realized by using the above-described high-efficiency fuel cell. Moreover, high-efficiency biosensor, bioreactor, energy conversion element, and enzyme reaction-utilizing apparatus can be realized likewise.

### Brief Description of Drawings

[Fig. 1] Fig. 1 is a schematic diagram showing an enzyme immobilization electrode according to a first embodiment of the present invention.
[Fig. 2] Fig. 2 is a schematic diagram showing a liposome encapsulating an enzyme and a coenzyme therein used in the enzyme immobilization electrode according to the first embodiment of the present invention.
[Fig. 3] Fig. 3 is a schematic diagram showing schematically an electron passing reaction due to an enzyme group and a coenzyme encapsulated in a liposome at the enzyme immobilization electrode according to the first embodiment of the present invention.
[Fig. 4] Fig. 4 is a photograph substituted for drawing, showing a fluorescent microscope image of a liposome encapsulating fluorescence-labeled alcohol dehydrogenase, fluorescence-labeled diaphorase, and NADH therein in an example of the present invention.
[Fig. 5] Fig. 5 is a photograph substituted for drawing, showing a fluorescent microscope image of a liposome encapsulating fluorescence-labeled alcohol dehydrogenase, fluorescence-labeled diaphorase, and NADH therein in an example of the present invention.
[Fig. 6] Fig. 6 is a photograph substituted for drawing, showing a fluorescent microscope image of a liposome encapsulating fluorescence-labeled alcohol dehydrogenase, fluorescence-labeled diaphorase, and NADH therein in an example of the present invention.
[Fig. 7] Fig. 7 is a schematic diagram showing the result of fluorescent monitoring of a liposome encapsulating fluorescence-labeled alcohol dehydrogenase, fluorescence-labeled diaphorase, and NADH therein in an example of the present invention.
[Fig. 8] Fig. 8 is a schematic diagram showing the result of fluorescent monitoring of a liposome encapsulating fluorescence-labeled alcohol dehydrogenase, fluorescence-labeled diaphorase, and NADH therein in an example of the present invention.
[Fig. 9] Fig. 9 is a schematic diagram showing the result of fluorescent monitoring of a liposome encapsulating fluorescence-labeled alcohol dehydrogenase, fluorescence-labeled diaphorase, and NADH therein in an example of the present invention.
[Fig. 10] Fig. 10 is a schematic diagram for explaining the stability of a liposome in an example of the present invention.
[Fig. 11] Fig. 11 is a schematic diagram showing the result of chronoamperometry performed in the case where liposomes encapsulating alcohol dehydrogenase, diaphorase, and NADH therein are dispersed in a predetermined solution and in the case where alcohol dehydrogenase, diaphorase, and NADH are simply dispersed in the predetermined solution in an example of the present invention.
[Fig. 12] Fig. 12 is a schematic diagram showing the state in which liposomes encapsulating alcohol dehydrogenase, diaphorase, and NADH therein are dispersed in a buffer solution in an example of the present invention.
[Fig. 13] Fig. 13 is a schematic diagram showing the state in which alcohol dehydrogenase, diaphorase, and NADH are simply dispersed in the buffer solution in an example of the present invention.
[Fig. 14] Fig. 14 is a schematic diagram showing an enzyme immobilization electrode according to a second embodiment of the present invention.
[Fig. 15] Fig. 15 is a schematic diagram showing a liposome which encapsulates an enzyme and a coenzyme therein and which is incorporated with a transporter, used in an enzyme immobilization electrode according to the second embodiment of the present invention.
[Fig. 16] Fig. 16 is a schematic diagram showing schematically an electron passing reaction due to an enzyme group and a coenzyme encapsulated in a liposome at the enzyme immobilization electrode according to the second embodiment of the present invention.
[Fig. 17] Fig. 17 is a schematic diagram showing a biofuel cell according to a third embodiment of the present invention.
[Fig. 18] Fig. 18 is a schematic diagram showing schematically a detailed configuration of a negative electrode of a biofuel cell, an example of an enzyme group and a coenzyme encapsulated in a liposome immobilized on this negative electrode, and an electron passing reaction due to the enzyme group and the coenzyme according to the third embodiment of the present invention.
[Fig. 19] Fig. 19 is a schematic diagram showing a specific configuration example of a biofuel cell according to the third embodiment of the present invention.
[Fig. 20] Fig. 20 is a top view, a sectional view, and a bottom view showing a biofuel cell according to a fifth embodiment of the present invention.
[Fig. 21] Fig. 21 is an exploded perspective view showing the biofuel cell according to the fifth embodiment of the present invention.
[Fig. 22] Fig. 22 is a schematic diagram for explaining a method for manufacturing the biofuel cell according to the fifth embodiment of the present invention.
[Fig. 23] Fig. 23 is a schematic diagram for explaining a first example of a method for using the biofuel cell according to the fifth embodiment of the present invention.
[Fig. 24] Fig. 24 is a schematic diagram for explaining a second example of the method for using the biofuel cell according to the fifth embodiment of the present invention.
[Fig. 25] Fig. 25 is a schematic diagram for explaining a third example of the method for using the biofuel cell according to the fifth embodiment of the present invention.
[Fig. 26] Fig. 26 is a schematic diagram showing a biofuel cell and a method for using the biofuel cell according to a sixth embodiment of the present invention.
[Fig. 27] Fig. 27 is a front view and a longitudinal sectional view showing a biofuel cell according to a seventh embodiment of the present invention.
[Fig. 28] Fig. 28 is an exploded perspective view showing the biofuel cell according to the seventh embodiment of the present invention.
[Fig. 29] Fig. 29 is a schematic diagram and a sectional view for explaining the structure of a porous electrically conductive material used as an electrode material for a negative electrode in a biofuel cell according to an eighth embodiment of the present invention.
[Fig. 30] Fig. 30 is a schematic diagram for explaining a method for manufacturing the porous electrically conductive material used as the electrode material for the negative electrode in the biofuel cell according to the eighth embodiment of the present invention.
[Fig. 31] Fig. 31 is a schematic diagram showing the bioreactor according to a ninth embodiment of the present invention.

### Description of Embodiments

The embodiments according to the present invention will be described below with reference to the drawings. In all drawings of the embodiments, the same or corresponding elements are indicated by the same reference numerals.

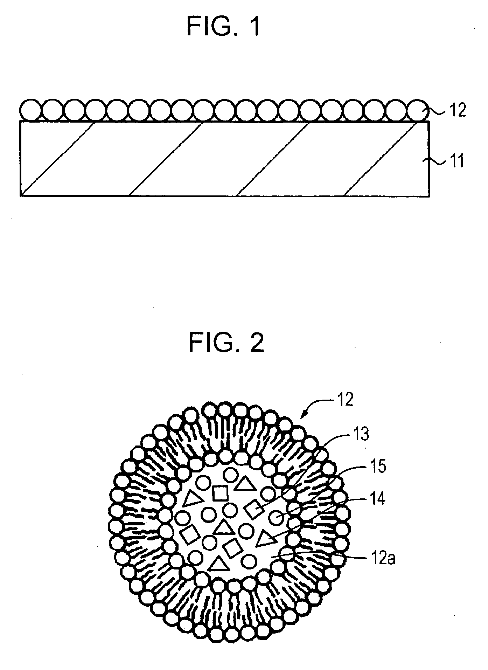

Fig. 1 shows an enzyme immobilization electrode according to a first embodiment of the present invention.

As shown in Fig. 1, in this enzyme immobilization electrode, liposomes 12 formed from a lipid double layer of phospholipid or the like are immobilized on a surface of an electrode 11 formed from porous carbon or the like through physical adsorption or the like. At least one type of enzyme and at least one type of coenzyme, which are involved in a desired enzyme reaction, are encapsulated in a water phase in the inside of this liposome 12. Fig. 2 shows a detailed structure of this liposome 12. In Fig. 2, two types of enzymes 13 and 14 and one type of coenzyme 15 are encapsulated in the water phase 12a in the inside of the liposome 12, although not limited to this, and the types of the enzyme and the coenzyme encapsulated are selected appropriately. For example, the enzyme 13 is an oxidation enzyme which facilitates oxidation of a fuel so as to decompose. The enzyme 14 is a coenzyme-oxidizing enzyme which returns the coenzyme 15 reduced along with oxidation of the fuel to an oxidized form and, in addition, which passes electrons to the electrode 11 through an electron mediator. Besides these enzymes 13 and 14 and coenzyme 15, for example, the electron mediator may be encapsulated in the water phase 12a in the inside of this liposome 12. This electron mediator may be immobilized on the electrode 11 together with the liposomes 12.

This enzyme immobilization electrode can be produced by, for example, producing the liposomes 12 encapsulating the enzymes 13 and 14 and the coenzyme 15 therein and, thereafter, immobilizing the resulting liposome 12 on the electrode 11. More specifically, for example, a buffer solution containing the enzyme 13, a buffer solution containing the enzyme 14, a buffer solution containing the coenzyme 15, and a buffer solution containing the liposomes 12 (the enzymes 13 and 14 and the coenzyme 15 are not encapsulated in the inside) are prepared individually, these buffer solutions are mixed and, thereafter, the enzymes 13 and 14 and the coenzyme 15 outside the liposomes 12 are removed by, for example, passing the resulting mixed solution through a gel filtration column.

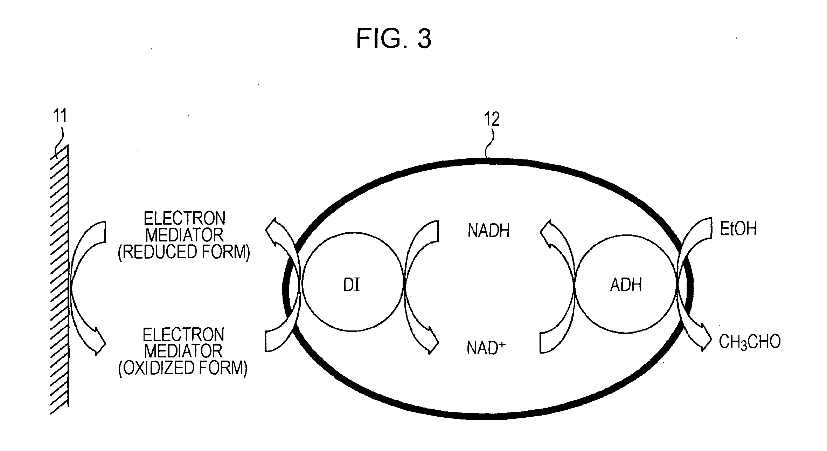

Fig. 3 schematically shows an example of an electron passing reaction due to the enzyme, the coenzyme, and the electron mediator at this enzyme immobilization electrode. In this example, the enzyme involved in decomposition of ethyl alcohol (EtOH) is alcohol dehydrogenase (ADH), the coenzyme, from which a reduced form is generated along with the oxidation reaction in the decomposition process of ethyl alcohol, is NAD⁺, and the coenzyme-oxidizing enzyme to oxidize NADH, which is a reduced form of the coenzyme, is diaphorase (DI). The electron mediator receives electrons generated along with oxidation of the coenzyme from the coenzyme-oxidizing enzyme and passes the electrons to the electrode 11. In this case, ethyl alcohol passes through the lipid double layer constituting the liposome 12 and enters the inside of the liposome 12. Acetaldehyde is generated through decomposition of this ethyl alcohol by alcohol dehydrogenase, and the resulting acetaldehyde exits to the outside of the liposome 12. The electron mediator enters and exits the lipid double layer constituting the liposome 12 so as to transfer electrons.

An example will be described.

A DI enzyme buffer solution (1) was prepared by weighing 5 mg of diaphorase (DI) (EC 1.8.1.4, produced by Amano Enzyme Inc.) and dissolving DI into 1 mL of buffer solution (10 mM phosphate buffer solution, pH 7).

An ADH enzyme buffer solution (2) was prepared by weighing 5 mg of alcohol diaphorase (ADH) (NAD-dependent type, EC 1.1.1.1, produced by Amano Enzyme Inc.) and dissolving ADH into 1 mL of buffer solution (10 mM phosphate buffer solution, pH 7).

It is preferable that the above-described buffer solution to dissolve the enzyme is kept in cold storage until just before the use, and it is preferable that the enzyme buffer solution is also kept in cold storage as much as possible.

An NADH buffer solution (3) was prepared by weighing 35 mg of NADH (N-8129, produced by Sigma-Aldrich Corporation) and dissolving NADH into 1 mL of buffer solution (10 mM phosphate buffer solution, pH 7).

A Q0 buffer solution (4) was prepared by weighing 15 to 300 mg of 2,3-dimethoxy-5-methyl-1,4-benzoquinone (Q0) and dissolving Q0 into 1 mL of buffer solution (10 mM phosphate buffer solution, pH 7).

A liposome buffer solution (5) was prepared by weighing 100 mg of yolk lecithin (produced by Wako) and dissolving yolk lecithin into 10 mL of buffer solution (10 mM phosphate buffer solution, pH 7).

The following amounts of the individual solutions prepared as described above were taken and mixed, and freezing and thawing were repeated three times.

DI enzyme buffer solution (1): 50 µL
ADH enzyme buffer solution (2): 50 µL
NADH buffer solution (3): 50 µL
liposome buffer solution (5): 50 µL
The above-described mixed solution was passed through a gel filtration column and, thereby, the enzyme and NADH outside the liposome were removed. The liposome solution obtained here was assumed to be an ADH, DI, and NADH-encapsulated liposome solution (6).

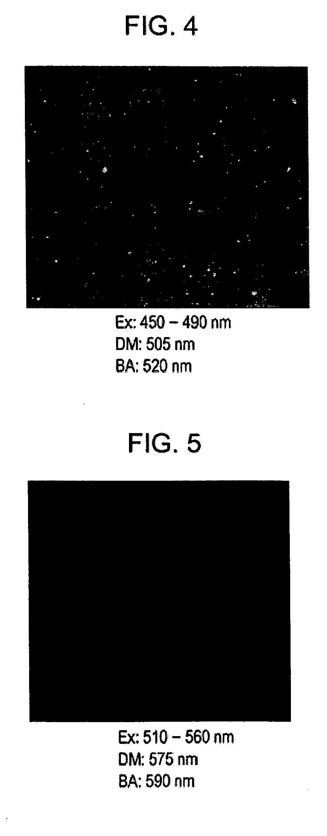

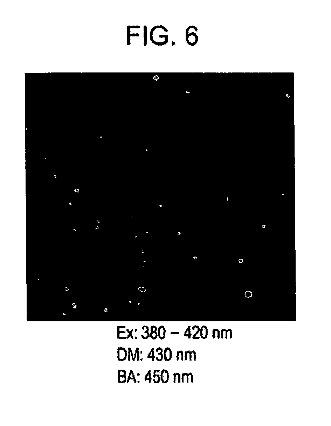

Fig. 4, Fig. 5, and Fig. 6 are fluorescent microscope photographs of a liposome encapsulating ADH fluorescence-labeled with a cyanine colorant Cy2, DI fluorescence-labeled with a cyanine colorant Cy3, and NADH therein. In Fig. 4, Fig. 5, and Fig. 6, Ex (Excitation) indicates excitation light with the wavelength described on the right of Ex, DM (Dichroic mirror) indicates a mirror which separates the excitation light and fluorescence and which transmits only the light with the wavelength larger than that described on the right of DM, and BA (Barrier filter) indicates a filter which separates fluorescence and scattered light and which transmits light with the wavelength larger than or equal to that described on the right of BA. In this fluorescent microscope, the colorant is excited with the excitation light, and the light resulting therefrom is passed through DM and BA sequentially to remove unnecessary light, and only the fluorescence from the colorant is detected. Fig. 4 shows the distribution of ADH where fluorescence was generated by exciting Cy2 with excitation light with a wavelength of 450 to 490 nm. Fig. 5 shows the distribution of DI where fluorescence was generated by exciting Cy3 with excitation light with a wavelength of 510 to 560 nm. Fig. 6 shows the distribution of NADH where fluorescence was generated by exciting NADH with excitation light with a wavelength of 380 to 420 nm.

From Fig. 4, Fig. 5, and Fig. 6, the average diameter of the liposome was 4.6 µm, and the standard deviation was 2.0 µm. In this regard, the average diameter of the liposome was determined by measuring the diameters of 30 liposomes in Fig. 4, Fig. 5, and Fig. 6 and averaging them.

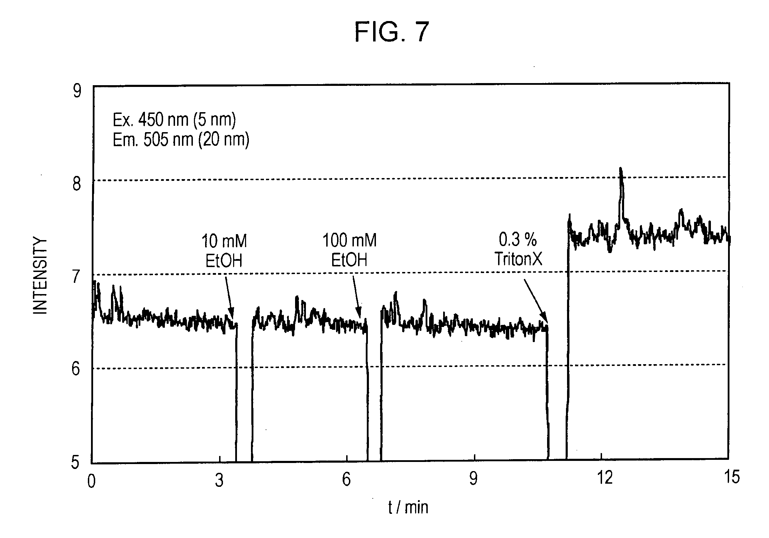

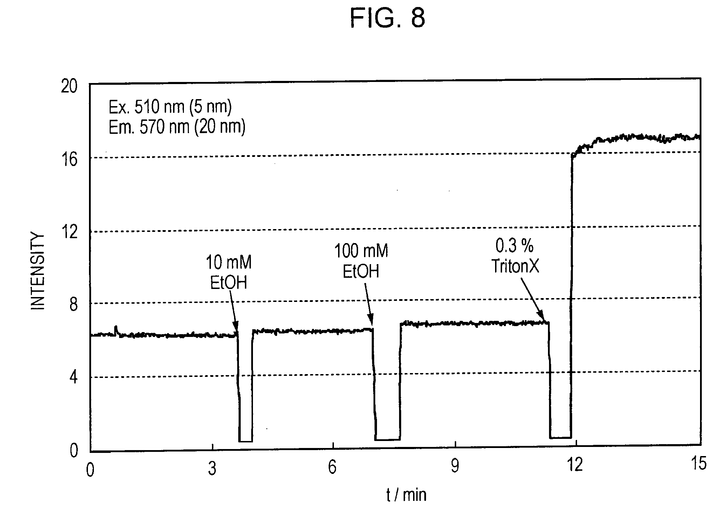

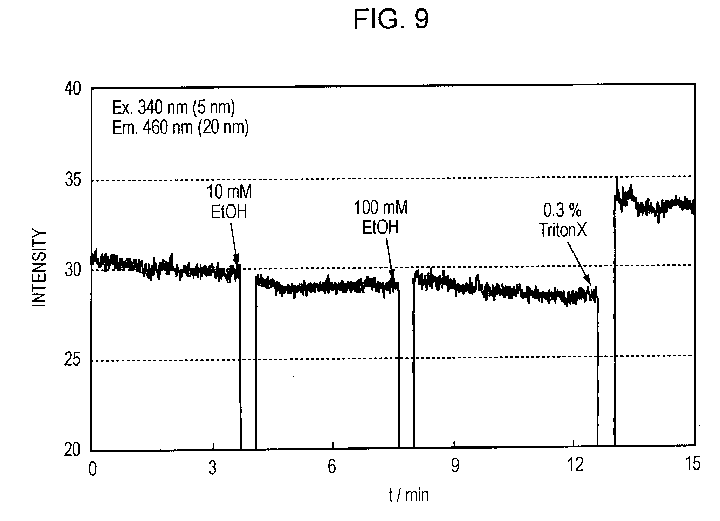

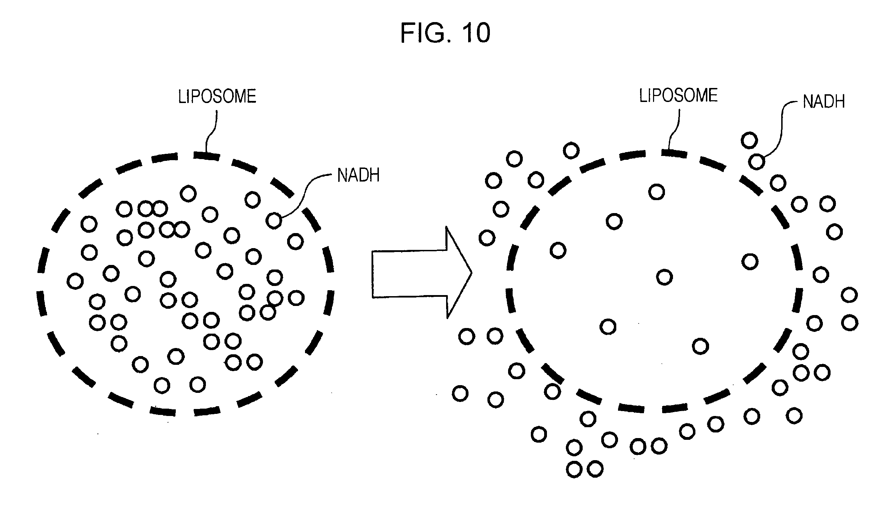

Fig. 7, Fig. 8, and Fig. 9 are graphs showing the result of fluorescent monitoring of a liposome encapsulating ADH fluorescence-labeled with Cy2, DI fluorescence-labeled with Cy3, and NADH therein. Fig. 7 indicates the intensity of fluorescence from ADH fluorescence-labeled with Cy2. Fig. 8 indicates the intensity of fluorescence from DI fluorescence-labeled with Cy3. Fig. 9 indicates the intensity of fluorescence from NADH. In Fig. 7, Fig. 8, and Fig. 9, Em (Emission) indicates light, which is emitted when the colorant is excited by excitation light Ex and which has a wavelength described on the right of Em, and the numerical values in parentheses on the right of the wavelength of Ex and the wavelength of Em are full-widths at half maximum. As is clear from Fig. 7, Fig. 8, and Fig. 9, the fluorescence intensity did not changed until the ethyl alcohol concentration reached 100 mM in every case. That is, it was made clear that the liposome was stable and ADH, DI, and NADH were encapsulated reliably in the inside of the liposome at least up to the ethyl alcohol concentration of 100 mM. Furthermore, when 0.3% TritonX serving as a surfactant was added, the fluorescence intensity increased. This indicates that the liposome was broken by 0.3% TritonX, and ADH, DI, and NADH in the inside were released to the outside of the liposome, so that the fluorescence intensity increased. As an example, the state of NADH at this time is shown in Fig. 10. As shown in Fig. 10, the fluorescence intensity due to NADH is low in the state in which NADH is encapsulated in the inside of the liposome, but when the liposome is broken and NADH encapsulated in the inside is released to the outside of the liposome, the fluorescence intensity due to NADH increases.

The thus obtained ADH, DI, and NADH-encapsulated liposome solution (6) and the Q0 buffer solution (4) were mixed to prepare a total volume 100 µL of measurement solution, carbon felt was employed as a working electrode, the potential was set at 0.3 V, which was sufficiently higher than the oxidation-reduction potential of the electron mediator, relative to a reference electrode Ag|AgCl, and chronoamperometry was performed while the solution was agitated. During the chronoamperometry, those in which ethyl alcohol was added in such a way that the final concentration became 1, 10, and 100 mM, were added to the measurement solution sequentially.

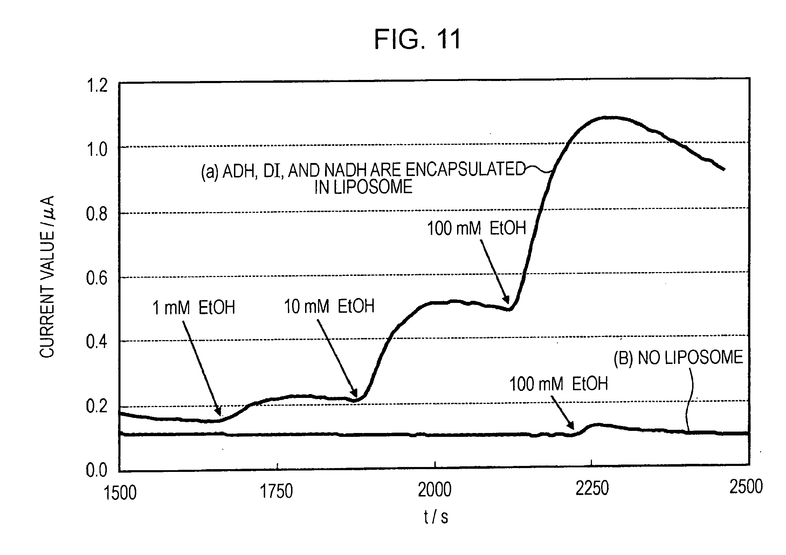

A curve (a) in Fig. 11 indicates the result of chronoamperometry, where ethyl alcohol was added to the above-described measurement solution containing the ADH, DI, and NADH-encapsulated liposome, as described above. As is clear from this curve (a), in the case where ADH, DI, and NADH were encapsulated in the liposome, a catalyst current resulting from ethyl alcohol was observed, and the catalyst current increased as the concentration of ethyl alcohol increased. That is, electrochemical catalyst activity on the basis of the ADH, DI, and NADH-encapsulated liposome, which was an artificial cell, was observed. On the other hand, regarding the case where the same amounts of ADH, DI, and NADH as the amounts in the case where ADH, DI, and NADH were encapsulated in the liposome were not encapsulated in the liposome, but were simply dispersed into the Q0 buffer solution (4), chronoamperometry was performed in a manner similar to that described above. A curve (b) in Fig. 11 indicates the result thereof. As is clear from this curve (b), in the case where ADH, DI, and NADH were not encapsulated in the liposome, but were simply dispersed into the Q0 buffer solution (4), a catalyst current resulting from ethyl alcohol was hardly observed. For example, if comparisons are made in the case where the ethyl alcohol concentration is 100 mM, the catalyst current obtained when ADH, DI, and NADH are not encapsulated in the liposome, but are simply dispersed into the Q0 buffer solution (4) is on the order of about one-thirtieth of the catalyst current obtained when ADH, DI, and NADH are encapsulated in the liposome. Consequently, it is clear that in the case where ADH, DI, and NADH are encapsulated in the liposome, a catalyst current far higher than that in the case where they are not encapsulated can be obtained.

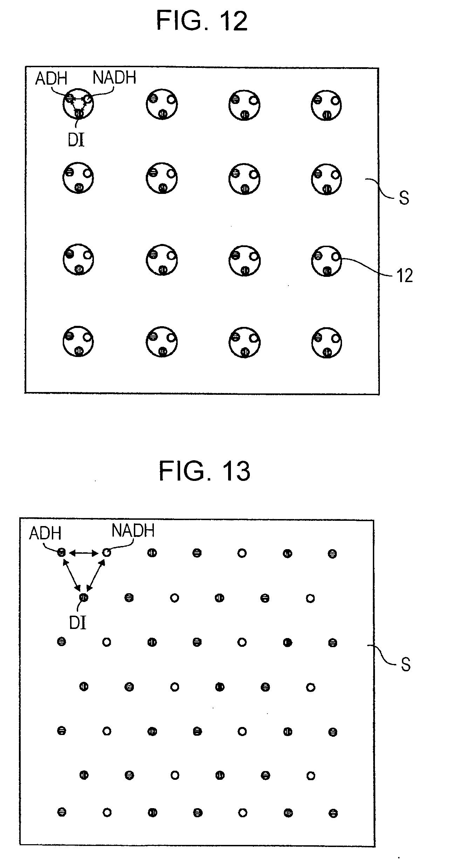

The reason the catalyst current obtained in the case where ADH, DI, and NADH are not encapsulated in the liposome is far higher than that in the case where they are not encapsulated, as described above, will be described. As shown in Fig. 12, the case where liposomes 12 encapsulating ADH (indicated by O provided with horizontal lines), DI (indicated by O provided with vertical lines), and NADH (indicated by an open circle O) therein are arranged in a tetragonal lattice pattern in a buffer solution S is considered. On the other hand, as shown in Fig. 13, the case where ADH (indicated by O provided with horizontal lines), DI (indicated by O provided with vertical lines), and NADH (indicated by an open circle O) in the same amounts as those shown in Fig. 12 are arranged in a hexagonal lattice pattern in the buffer solution S having the same volume as that shown in Fig. 12 is considered. The volume of the buffer solution S is, for example, 100 µL, and the volume of the inside of the liposome 12 is, for example, about 0.17 µL. In this regard, 5.5 x 10⁻³ µmol of phospholipid constituting the lipid double layer of the liposomes 12 is present in the buffer solution S, and a total volume of the inside of the liposomes 12 is 30 µL/µmol in terms of volume per micromole of liposome. The local concentration of ADH, DI, and NADH in the case where these ADH, DI, and NADH are encapsulated in the liposome 12, as shown in Fig. 12, is about 600 times higher than the concentration of ADH, DI, and NADH in the case where ADH, DI, and NADH are simply dispersed into the buffer solution S, as shown in Fig. 13. That is, ADH, DI, and NADH are encapsulated in the liposome 12 and, thereby, the concentrations of these ADH, DI, and NADH can be increased significantly and mutual distances between these ADH, DI, and NADH can be reduced significantly. Consequently, the catalyst cycle due to ADH, DI, and NADH proceeds at very high speed in the liposome 12, so that the results as shown in Fig. 11 are obtained.

As described above, according to this first embodiment, the enzyme and the coenzyme required for the enzyme reaction are encapsulated in the inside of the liposome 12, and this liposome 12 is immobilized on the electrode 11. Consequently, the enzyme reaction can be effected efficiently while a minute space in the inside of the liposome 12 serves as a reaction field, so that electrons can be taken out of the substrate efficiently and be passed to the electrode 11. In addition, immobilization can be performed easily as compared with that in the case where the enzyme or the like is immobilized directly on the electrode 11 by a polyion complex or the like.

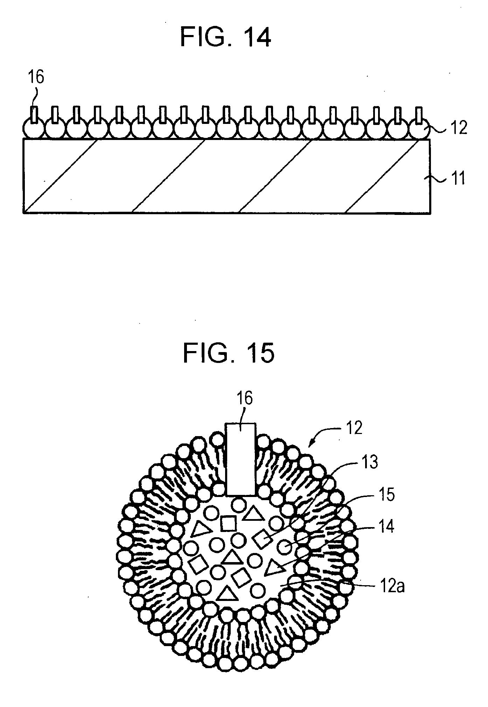

Fig. 14 shows an enzyme immobilization electrode according to a second embodiment of the present invention.

As shown in Fig. 14, in this enzyme immobilization electrode, as in the first embodiment, liposomes 12 are immobilized on an electrode 11 through physical adsorption or the like. At least one type of enzyme and at least one type of coenzyme, which are involved in a desired enzyme reaction, are encapsulated in a water phase in the inside of this liposome 12. In addition, a transporter 16 is incorporated in a lipid double layer constituting this liposome 12. Fig. 15 shows a detailed structure of this liposome 12. The transporter 16 is to transport a substrate of the enzyme reaction in the case where this substrate is not easily taken into the inside through the lipid double layer constituting the liposome 12, and a material selected appropriately in accordance with the substrate is used. For example, in the case where the substrate is glucose, a glucose transporter is used as the transporter 16.

This enzyme immobilization electrode is the same as that in the first embodiment except those described above.

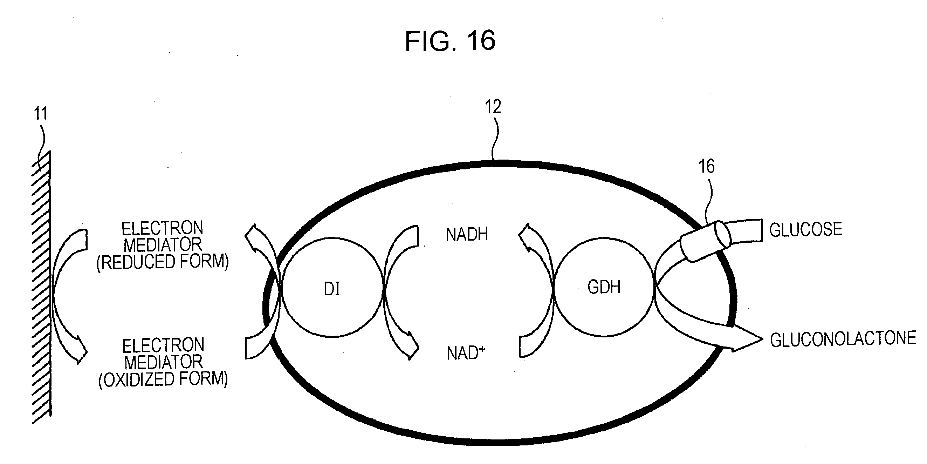

Fig. 16 schematically shows an example of an electron passing reaction due to an enzyme, a coenzyme, and an electron mediator at this enzyme immobilization electrode. In this example, the transporter 16 incorporated in the liposome 12 is the glucose transporter, the enzyme involved in decomposition of glucose is glucose dehydrogenase (GDH), the coenzyme, from which a reduced form is generated along with the oxidation reaction in the decomposition process of glucose, is NAD⁺, and the coenzyme-oxidizing enzyme to oxidize NADH, which is a reduced form of the coenzyme, is diaphorase (DI). The electron mediator receives electrons generated along with oxidation of the coenzyme from the coenzyme-oxidizing enzyme and passes the electrons to the electrode 11.

According to the second embodiment, the same advantages as those in the first embodiment can be obtained.

Next, a third embodiment according to the present invention will be described. In this third embodiment, the enzyme immobilization electrode according to the second embodiment is used as a negative electrode of a biofuel cell.

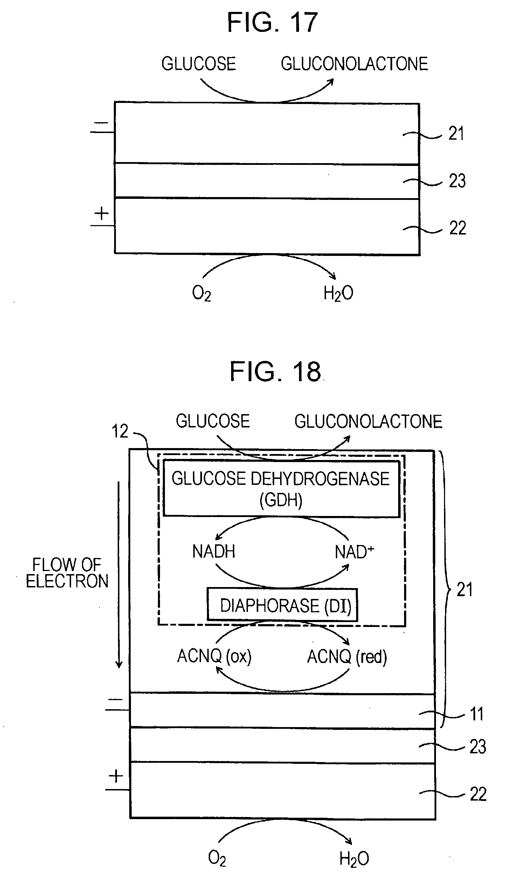

Fig. 17 schematically shows this biofuel cell. In this biofuel cell, glucose is used as a fuel. Fig. 18 schematically shows a detailed configuration of a negative electrode of this biofuel cell, an example of an enzyme group and a coenzyme encapsulated in a liposome 12 immobilized on this negative electrode, and an electron passing reaction due to the enzyme group and the coenzyme.

As shown in Fig. 17 and Fig. 18, this biofuel cell has a structure in which a negative electrode 21 and a positive electrode 22 are opposed with an electrolyte layer 23 therebetween. The negative electrode 21 decomposes glucose supplied as the fuel with the enzyme to take out electrons and, in addition, generate protons (H⁺). The positive electrode 22 generates water from the proton transported from the negative electrode 21 through the electrolyte layer 23, the electron transferred from the negative electrode 21 through an external circuit and, for example, oxygen in the air.

The negative electrode 21 has a configuration in which a liposome 12 encapsulating an enzyme involved in decomposition of glucose, a coenzyme (for example, NAD⁺), from which a reduced form is generated along with the oxidation reaction in the decomposition process of glucose, and a coenzyme-oxidizing enzyme (for example, diaphorase (DI)) to oxidize the reduced form of the coenzyme (for example, NADH) therein is immobilized on an electrode 11 (refer to Fig. 18) formed from, for example, porous carbon, and in addition to this, as necessary, an electron mediator (for example, ACNQ) to receive electrons generated along with oxidation of the coenzyme from the coenzyme-oxidizing enzyme and pass the electrons to the electrode 11 is immobilized in a manner similar to the enzyme immobilization electrode according to the second embodiment. A glucose transporter serving as the transporter 16 is incorporated in a lipid double layer constituting the liposome 12, although not shown in the drawing, Fig. 18.

As for the enzyme involved in decomposition of glucose, for example, glucose dehydrogenase (GDH), preferably NAD-dependent glucose dehydrogenase can be used. For example, β-D-glucose can be oxidized to D-glucono-δ-lactone in the presence of this oxidation enzyme.

Furthermore, the resulting D-glucono-δ-lactone can be decomposed to 2-keto-6-phospho-D-gluconate in the presence of two enzymes of gluconokinase and phosphogluconate dehydrogenase (PhGDH). That is, D-glucono-δ-lactone is converted to D-gluconate through hydrolysis. D-gluconate hydrolyzes adenosine triphosphate (ATP) into adenosine diphosphate (ADP) and phosphoric acid in the presence of gluconokinase and, thereby, is converted to 6-phospho-D-gluconate through phosphorylation. The resulting 6-phospho-D-gluconate is oxidized to 2-keto-6-phospho-D-gluconate by the action of the oxidation enzyme PhGDH.

Moreover, glucose can also be decomposed up to CO₂ through the use of glucose metabolism besides the above-described decomposition process. This decomposition process through the use of the glucose metabolism is roughly classified into decomposition of glucose and generation of pyruvic acid through a glycolytic pathway and a TCA cycle. These are well-known reaction systems.

An oxidation reaction in the decomposition process of a monosaccharide is effected along with a reduction reaction of the coenzyme. This coenzyme is almost specific for an enzyme on which the coenzyme acts. As for GDH, NAD⁺ is used as the coenzyme. That is, when β-D-glucose is oxidized to D-glucono-δ-lactone by the action of GDH, NAD⁺ is reduced to NADH so as to generate H⁺.

The resulting NADH is immediately oxidized to NAD⁺ in the presence of diaphorase (DI), so as to generate two electrons and H⁺. Therefore, two electrons and two H⁺ per molecule of glucose are generated in one stage of oxidation reaction. Four electrons and four H⁺ in total are generated in two stages of oxidation reaction.

The electron generated by the above-described process is passed from diaphorase through the electron mediator to the electrode 11, and H⁺ is transported to the positive electrode 22 through the electrolyte layer 23.

It is preferable that the liposome 12 encapsulating the above-described enzyme and coenzyme therein and the electron mediator are maintained at a pH optimum to the enzyme, for example, a pH of about 7, with a buffer solution, e.g., a phosphate buffer solution or a Tris buffer solution, contained in the electrolyte layer 23 in order that the electrode reaction proceeds efficiently and constantly. As for the phosphate buffer solution, for example, NaH₂PO₄ and KH₂PO₄ are used. Furthermore, too high or too low ionic strength (I.S.) adversely affects the enzyme activity. In consideration of electrochemical responsiveness as well, an appropriate ionic strength, for example, about 0.3, is preferable. However, the pH and the ionic strength are not limited to the above-described values because optimum values are present with respect to the individual enzymes employed.

As an example, Fig. 18 shows the case where the enzyme involved in decomposition of glucose is glucose dehydrogenase (GDH), the coenzyme, from which a reduced form is generated along with the oxidation reaction in the decomposition process of glucose, is NAD⁺, the coenzyme-oxidizing enzyme to oxidize NADH, which is a reduced form of the coenzyme, is diaphorase (DI), and the electron mediator, which receives electrons generated along with oxidation of the coenzyme from the coenzyme-oxidizing enzyme and which passes the electrons to the electrode 11, is ACNQ.

The positive electrode 22 is prepared by immobilizing an enzyme, e.g., bilirubin oxidase, laccase, or ascorbate oxidase, to decompose oxygen on a porous carbon electrode or the like. The outer portion (portion on the side opposite to the electrolyte layer 23) of this positive electrode 22 is usually formed from a gas diffusion layer composed of porous carbon, although not limited to this. It is favorable that an electron mediator besides the enzyme is also immobilized on the positive electrode 22 in order that electrons are passed between the positive electrode 22 and the electron mediator.

Regarding this positive electrode 22, water is generated through reduction of oxygen in the air by H⁺ from the electrolyte layer 23 and electrons from the negative electrode 21 in the presence of the above-described enzyme to decompose oxygen.

The electrolyte layer 23 transports H⁺ generated at the negative electrode 21 to the positive electrode 22. The electrolyte layer 23 has no electron conductivity and is formed from a material capable of transporting H⁺. As for the electrolyte layer 23, the materials described above, for example, cellophane, can be used.

In the thus formed biofuel cell, when glucose is supplied to the negative electrode 21 side, this glucose is decomposed by the decomposition enzyme containing the oxidation enzyme. Since the oxidation enzyme is involved in the decomposition process of the monosaccharide, electrons and H⁺ can be generated on the negative electrode 21 side, and a current can be generated between the negative electrode 21 and the positive electrode 22.

Next, a specific structural example of the biofuel cell will be described.

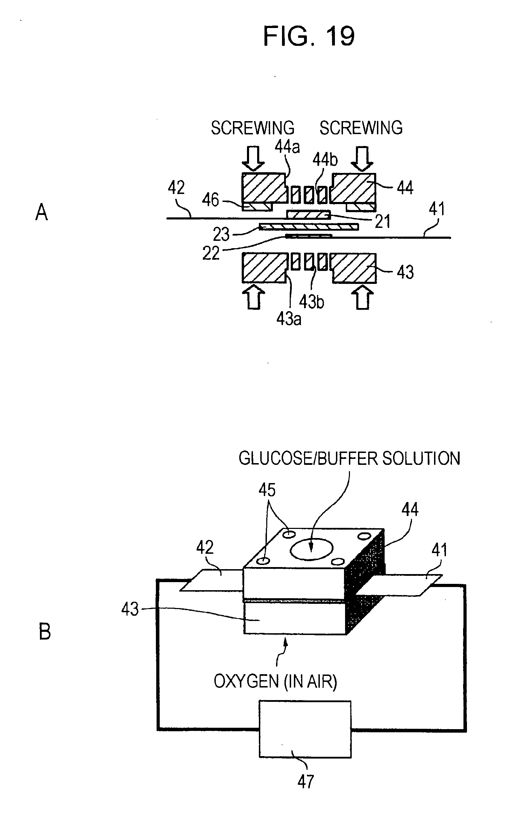

As shown in Fig. 19 A and B, this biofuel cell has a configuration in which the negative electrode 21 and the positive electrode 22 are opposed with the electrolyte layer 23 therebetween. In this case, Ti current collectors 41 and 42 are disposed under the positive electrode 22 and under the negative electrode 21, respectively, in order that current collection can be performed easily. Reference numerals 43 and 44 denote clamping plates. These clamping plates 43 and 44 are fastened together with screws 45, and the whole of the positive electrode 22, the negative electrode 21, the electrolyte layer 23, and the Ti current collectors 41 and 42 are sandwiched therebetween. A circular concave portion 43a for air intake is disposed on one surface (outside surface) of the clamping plate 43. Many holes 43b penetrated to the other surface are disposed in the bottom of this concave portion 43a. These holes 43b serve as air feed channels to the positive electrode 22. On the other hand, a circular concave portion 44a for fuel charge is disposed on one surface (outside surface) of the clamping plate 44. Many holes 44b penetrated to the other surface are disposed in the bottom of this concave portion 44a. These holes 44b serve as fuel feed channels to the negative electrode 21. Spacers 46 are disposed on the peripheral portion of the other surface of the clamping plate 44 in such a way that when the clamping plates 43 and 44 are fastened together with screws 45, the distance therebetween becomes a predetermined distance.

As shown in Fig. 19 B, a load 47 is connected between the Ti current collectors 41 and 42, a fuel, for example, a glucose solution in which glucose is dissolved in a phosphate buffer solution, is put into the concave portion 44a of the clamping plate 44, and power generation is performed.

According to this third embodiment, the enzyme immobilization electrode, in which the liposome 12 encapsulating the enzyme group and the coenzyme required for the enzyme reaction therein and incorporating glucose transporter serving as the transporter 16 is immobilized on the electrode 11, is used as the negative electrode 21. Consequently, the enzyme reaction can be effected efficiently while a minute space in the inside of the liposome 12 serves as a reaction field, so that electrons can be taken out of glucose serving as the fuel efficiently and be passed to the electrode 11. In addition, immobilization can be performed easily as compared with that in the case where the enzyme or the like is immobilized directly on the electrode 11 by a polyion complex or the like. Since the enzyme immobilization electrode used as the negative electrode 21 exhibits high efficiency, as described above, a high-efficiency biofuel cell can be realized. In this regard, in order to increase the output of the biofuel cell, it is required to take out more than two electrons from glucose serving as the fuel. For this purpose, it is necessary to use an enzyme immobilization electrode, in which at least three types of enzymes are immobilized at appropriate positions, is used as the negative electrode 21. Such a requirement can be satisfied by encapsulating at least three types of enzymes in the inside of the liposome 12. Furthermore, response to many types of fuels becomes easy by inclusion of many types of liposomes encapsulating at least three types of mutually different enzymes therein. Moreover, a micro-biofuel cell in which negative electrode liposomes and positive electrode liposomes are arranged can also be realized.

Next, a biofuel cell according to a fourth embodiment of the present invention will be described.

In this biofuel cell, starch, which is a polysaccharide, is used as a fuel. Furthermore, glucoamyrase serving as a decomposition enzyme to decompose starch to glucose is also immobilized on the negative electrode 21 because starch is used as the fuel. Specifically, for example, glucoamyrase is immobilized directly on the electrode 11 or, for example, a polyethylene glycol chain serving as an anchor is immobilized on the liposome 12.

In this biofuel cell, when starch serving as a fuel is supplied to the negative electrode 21 side, this starch is hydrolyzed to glucose by glucoamyrase. Furthermore, the resulting glucose is taken into the inside of the liposome 12 with a glucose transporter and is decomposed by glucose dehydrogenase. Along with an oxidation reaction in this decomposition process, NAD⁺ is reduced to generate NADH, and the resulting NADH is oxidized by diaphorase to be separated into two electrons, NAD⁺, and H⁺. Therefore, two electrons and two H⁺ per molecule of glucose are generated in one stage of oxidation reaction. Four electrons and four H⁺ in total are generated in two stages of oxidation reaction. The thus generated electron is passed to the electrode 11 of the negative electrode 21, and H⁺ moves to the positive electrode 22 through the electrolyte layer 23. Regarding the positive electrode 22, the resulting H⁺ reacts with oxygen supplied from the outside and the electron transferred from the negative electrode 21 through an external circuit, so as to generate H₂O.

This biofuel cell is the same as that according to the third embodiment of the present invention except those described above.

According to this fourth embodiment, the same advantages as those in the third embodiment can be obtained. In addition, since starch is used as the fuel, an advantage can be obtained in that the amount of power generation can be increased as compared with that in the case where glucose is used as the fuel.

Next, a biofuel cell according to a fifth embodiment of the present invention will be described.

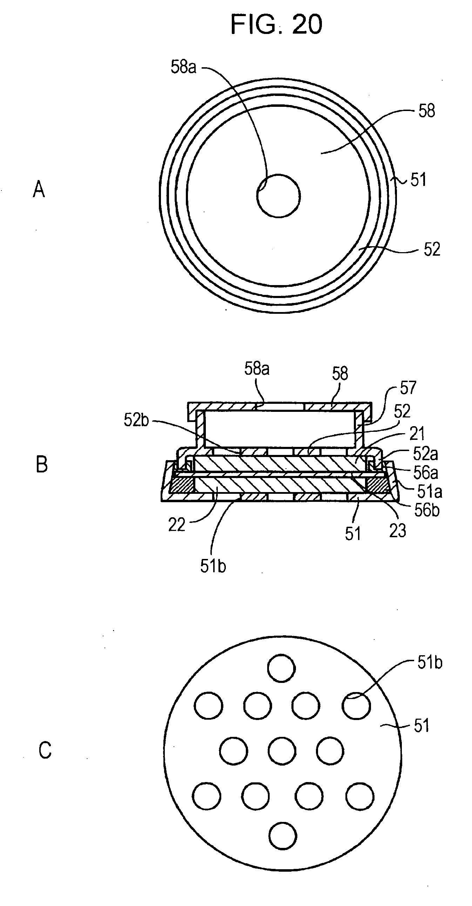

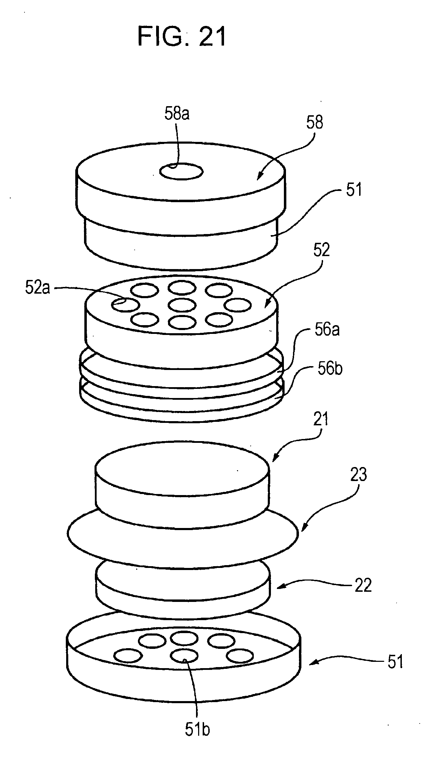

Fig. 20 A, B, and C and Fig. 21 show this biofuel cell. Fig. 20 A, B, and C are a top view, a sectional view, and a bottom view of this biofuel cell, and Fig. 21 is an exploded perspective view showing the exploded individual components of this biofuel cell.

As shown in Fig. 20 A, B, and C and Fig. 21, in this biofuel cell, a positive electrode 22, an electrolyte layer 23, and a negative electrode 21 are held in the inside of a space formed between a positive electrode collector 51 and a negative electrode collector 52 while being sandwiched from top and bottom by the positive electrode collector 51 and the negative electrode collector 52. Among the positive electrode collector 51, the negative electrode collector 52, the positive electrode 22, the electrolyte layer 23, and the negative electrode 21, the members next to each other are mutually adhered. In this case, these positive electrode collector 51, negative electrode collector 52, positive electrode 22, electrolyte layer 23, and negative electrode 21 have circular two-dimensional shapes, and likewise, the whole of this biofuel cell has a circular two-dimensional shape.

The positive electrode collector 51 is to collect current generated at the positive electrode 22, and the current is taken from this positive electrode collector 51 to the outside. Furthermore, the negative electrode collector 52 is to collect current generated at the negative electrode 21. In general, these positive electrode collector 51 and negative electrode collector 52 are formed from a metal, an alloy, or the like, although not limited to this. The positive electrode collector 51 has a flat and nearly cylindrical shape. Likewise, the negative electrode collector 52 has a flat and nearly cylindrical shape. Then, the space to hold the positive electrode 22, the electrolyte layer 23, and the negative electrode 21 is formed by swaging an edge of the outside perimeter portion 51a of the positive electrode collector 51 relative to the outside perimeter portion 52a of the negative electrode collector 52 with a ring-shaped gasket 56a formed from an insulating material, e.g., silicone rubber, and a ring-shaped hydrophobic resin 56b, e.g., polytetrafluoroethylene (PTFE), therebetween. The hydrophobic resin 56b is disposed in a space surrounded by the positive electrode 22, the positive electrode collector 51, and the gasket 56a while being adhered to these positive electrode 22, positive electrode collector 51, and gasket 56a. Excessive penetration of the fuel into the positive electrode 22 side can be suppressed by this hydrophobic resin 56b effectively. The end portion of the electrolyte layer 23 is extended outside the positive electrode 22 and the negative electrode 21 and is sandwiched between the gasket 56a and the hydrophobic resin 56b. The positive electrode collector 51 has a plurality of oxidant supply holes 51b all over the bottom thereof, and the positive electrode 22 is exposed at the inside of these oxidant supply holes 51b. In Fig. 20 C and Fig. 21, 13 circular oxidant supply holes 51b are shown, although this is no more than an example. All the number, the shape, the size, and the arrangement of the oxidant supply holes 51b can be selected appropriately. Likewise, the negative electrode collector 52 has a plurality of fuel supply holes 52b all over the top thereof, and the negative electrode 21 is exposed at the inside of these fuel supply holes 52b. In Fig. 21, 9 circular fuel supply holes 52b are shown, although this is no more than an example. All the number, the shape, the size, and the arrangement of the fuel supply holes 52b can be selected appropriately.

The negative electrode collector 52 has a circular cylinder-shaped fuel tank 57 on the side opposite to the negative electrode 21. This fuel tank 57 is disposed integrally with the negative electrode collector 52. A fuel used (not shown in the drawing), for example, a glucose solution, a solution in which an electrolyte is further added to the glucose solution, or the like is put into the fuel tank 57. A circular cylinder-shaped lid 58 is removably attached to this fuel tank 57. For example, this lid 58 is fit into the fuel tank 57 or is screwed thereto. A circular fuel supply hole 58a is disposed in a central portion of this lid 58. This fuel supply hole 58a is sealed by, for example, sticking an airtight seal, although not shown in the drawing.

The configurations except those described above of this biofuel cell is the same as the configurations in the third embodiment within the bounds of not impairing the features thereof.

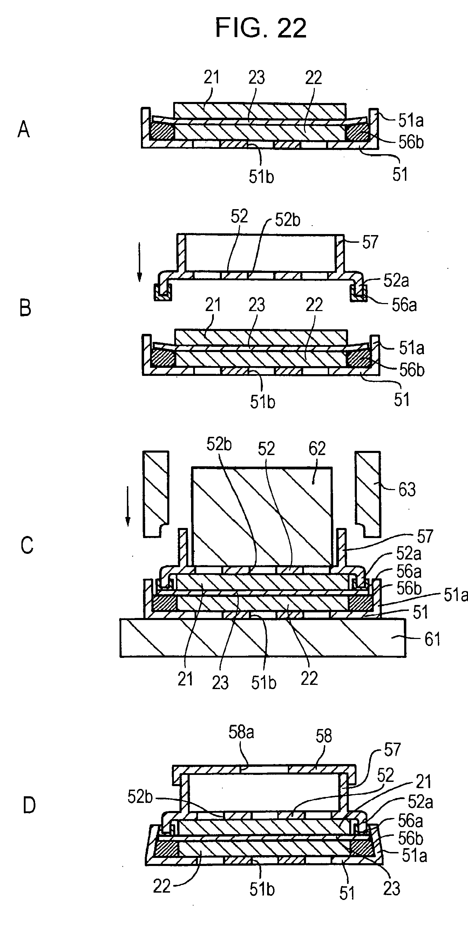

Next, an example of a method for manufacturing this biofuel cell will be described. This manufacturing method is shown in Fig. 22 A to D.

As shown in Fig. 22 A, initially, the circular cylinder-shaped positive electrode collector 51 having one open end is prepared. A plurality of oxidant supply holes 51b are disposed all over the bottom of this positive electrode collector 51.
The ring-shaped hydrophobic resin 56b is placed on the outer region of the inside bottom of this positive electrode collector 51, and the positive electrode 22, the electrolyte layer 23, and the negative electrode 21 are stacked on the central portion of this bottom sequentially.

On the other hand, as shown in Fig. 22 B, the circular cylinder-shaped negative electrode collector 52 having one open end and being provided with the fuel tank 57 integrally disposed thereon is prepared. A plurality of fuel supply holes 52b are disposed all over the surface of the negative electrode collector 52. A gasket 56a having a cross-section in the shape of a letter U is attached to the edge of the outside perimeter surface of the negative electrode collector 52. Then, this negative electrode collector 52 is put with the open side down on the negative electrode 21, so as to sandwich the positive electrode 22, the electrolyte layer 23, and the negative electrode 21 between the positive electrode collector 51 and the negative electrode collector 52.

Subsequently, as shown in Fig. 22 C, the resulting unit, in which the positive electrode 22, the electrolyte layer 23, and the negative electrode 21 are sandwiched between the positive electrode collector 51 and the negative electrode collector 52, is placed on a table 61 of a swaging machine. The negative electrode collector 52 is pressed with a pressing member 62, so as to mutually adhere the members next to each other of the positive electrode collector 51, the positive electrode 22, the electrolyte layer 23, the negative electrode 21, and the negative electrode collector 52. In this state, a swaging tool 63 is moved downward, so as to swage the edge of the outside perimeter portion 51a of the positive electrode collector 51 relative to the outside perimeter portion 52a of the negative electrode collector 52 with the gasket 56a and the hydrophobic resin 56b therebetween. The swaging is performed in such a way that the gasket 56a is crashed gradually and no gap is generated between the positive electrode collector 51 and the gasket 56a nor between the negative electrode collector 52 and the gasket 56a. Furthermore, at this time, the hydrophobic resin 56b is also compressed gradually so as to be adhered to the positive electrode 22, the positive electrode collector 51, and the gasket 56a. Consequently, the positive electrode collector 51 and the negative electrode collector 52 are electrically insulated from each other with the gasket 56a, and in that state, the space for holding the positive electrode 22, the electrolyte layer 23, and the positive electrode 21 is formed in the inside of them. Thereafter, the swaging tool 63 is moved upward.

In this manner, as shown in Fig. 22 D, the biofuel cell is produced, in which the positive electrode 22, the electrolyte layer 23, and the positive electrode 21 are held in the inside of the space formed between the positive electrode collector 51 and the negative electrode collector 52.

Then, the lid 58 is attached to the fuel tank 57, and the fuel and the electrolyte are injected from the fuel supply hole 58a of this lid 58. Thereafter, this fuel supply hole 58a is closed by, for example, sticking an airtight seal. In this regard, the fuel and the electrolyte may be injected into the fuel tank 57 in the step shown in Fig. 22 B.

Regarding this biofuel cell, in the case where, for example, a glucose solution is used as the fuel put in the fuel tank 57, the negative electrode 21 decomposes supplied glucose with the enzyme to take out electrons and, in addition, generates H⁺. The positive electrode 22 generates water from the H⁺, each transported from the negative electrode 21 through the electrolyte layer 23, the electron transferred from the negative electrode 21 through an external circuit and, for example, oxygen in the air. Consequently, an output voltage is obtained between the positive electrode collector 51 and the negative electrode collector 52.

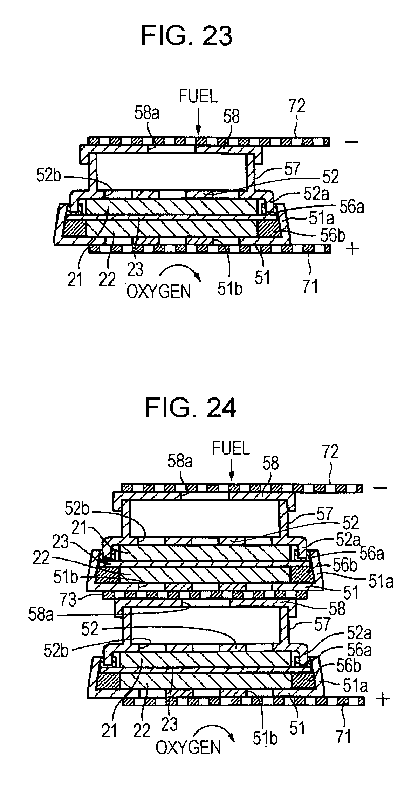

As shown in Fig. 23, the positive electrode collector 51 and the negative electrode collector 52 of this biofuel cell may be provided with mesh electrodes 71 and 72, respectively. In this case, the air of the outside enters the oxidant supply holes 51b of the positive electrode collector 51 through the holes of the mesh electrode 71, and the fuel enters the fuel tank 57 from the fuel supply hole 58a of the lid 58 through the holes of the mesh electrode 72.

Fig. 24 shows the case where two biofuel cells are connected in series. In this case, a mesh electrode 73 is intercalated between the positive electrode collector 51 of one biofuel cell (an upper fuel cell in the drawing) and the lid 58 of the other biofuel cell (a lower biofuel cell in the drawing). In this case, the air of the outside enters the oxidant supply holes 51b of the positive electrode collector 51 through the holes of the mesh electrode 73. The fuel can also be supplied by using a fuel supply system.

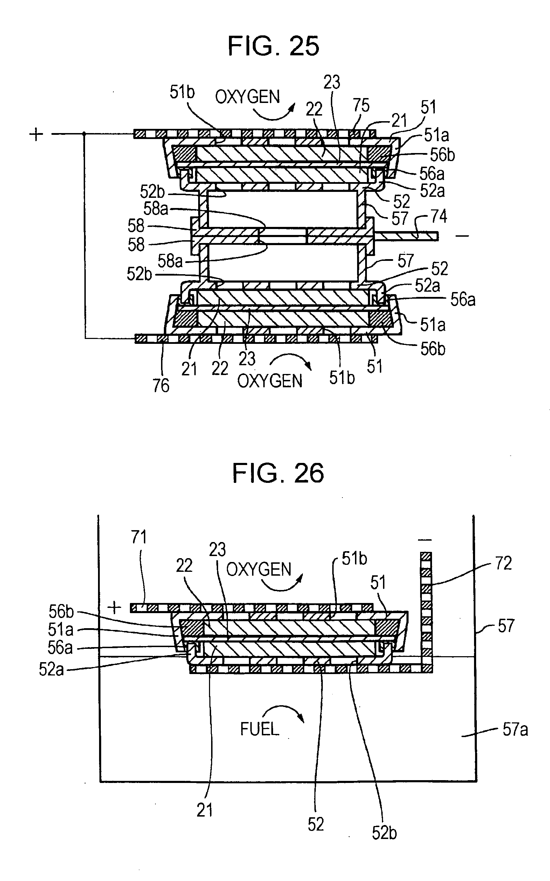

Fig. 25 shows the case where two biofuel cells are connected in parallel. In this case, the fuel tank 57 of one biofuel cell (an upper fuel cell in the drawing) and the fuel tank 57 of the other biofuel cell (a lower biofuel cell in the drawing) are brought into contact with each other in such a way that the fuel supply holes 58a of the lids 58 thereof agree with each other, and an electrode 74 is led from the side surfaces of the fuel tanks 57. Furthermore, the positive electrode collector 51 of the above-described one biofuel cell and the positive electrode collector 51 of the above-described other biofuel cell are provided with mesh electrodes 75 and 76, respectively. These mesh electrodes 75 and 76 are connected to each other. The air of the outside enters the oxidant supply holes 51b of the positive electrode collectors 51 through the holes of the mesh electrode 75 and 76.

According to this fifth embodiment, regarding a coin type or a button type biofuel cell except the fuel tank 57, the same advantages as those in the third embodiment can be obtained. Furthermore, in this biofuel cell, the positive electrode 22, the electrolyte layer 23, and the negative electrode 21 are sandwiched between the positive electrode collector 51 and the negative electrode collector 52, and the edge of the outside perimeter portion 51a of the positive electrode collector 51 is swaged relative to the outside perimeter portion 52a of the negative electrode collector 52 with the gasket 56a therebetween, so that various components can be uniformly adhered to each other. Therefore, variations in output can be prevented and, in addition, leakage of cell solutions, e.g., the fuel and the electrolyte, from interfaces between the individual components can be prevented. Moreover, the production steps of this biofuel cell are simple. In addition, this biofuel cell is downsized easily. Furthermore, even if the fuel or the electrolyte leaks to the outside, the safety of this biofuel cell is ensured by using a glucose solution or starch as the fuel and selecting the pH of the electrolyte used in the vicinity of 7 (neutral).

Moreover, regarding the air cell in practical use at present, it is necessary to add a fuel and an electrolyte during production and addition after production is difficult, whereas regarding this biofuel cell, the fuel and the electrolyte can be added after production, so that this biofuel cell is produced easily as compared with the air cell in practical use at present.

Next, a biofuel cell according to a sixth embodiment of the present invention will be described.

As shown in Fig. 26, in this sixth embodiment, the fuel tank 57 disposed integrally with the negative electrode collector 52 is removed from the biofuel cell according to the fifth embodiment, and furthermore, the positive electrode collector 51 and the negative electrode collector 52 provided with the mesh electrodes 71 and 72, respectively, are used. The resulting biofuel cell is used while being floated with the negative electrode 21 side down and the positive electrode 22 side up on a fuel 57a put in an open system fuel tank 57.

This sixth embodiment is the same as the third and the fifth embodiments except those described above within the bounds of not impairing the features thereof.

According to this sixth embodiment, the same advantages as those in the third and the fifth embodiments can be obtained.

Next, a biofuel cell according to a seventh embodiment of the present invention will be described. The biofuel cell according to the fifth embodiment is of a coin type or a button type, whereas this biofuel cell is of a cylinder type.

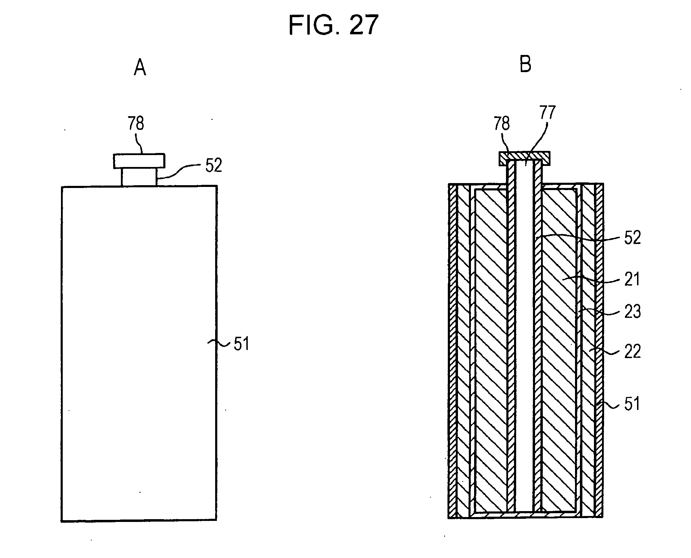

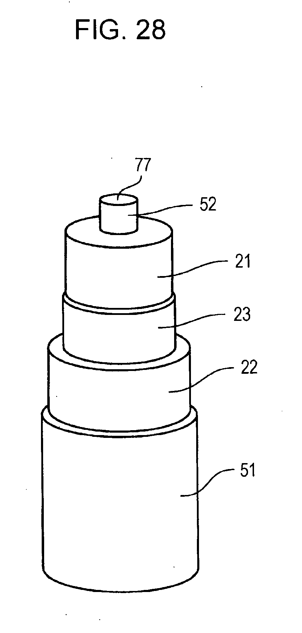

Fig. 27 A and B and Fig. 28 shows this biofuel cell. Fig. 27 A is a front view of this biofuel cell, and Fig. 27 B is a longitudinal sectional view of this biofuel cell. Fig. 28 is a exploded perspective view showing the exploded individual components of this biofuel cell.

As shown in Fig. 27 A and B and Fig. 28, in this biofuel cell, the negative electrode collector 52, the negative electrode 21, the electrolyte layer 23, the positive electrode 22, and the positive electrode collector 51, each in the shape of a cylinder, are disposed on the outside perimeter of a circular columnar fuel holding portion 77 sequentially. In this case, the fuel holding portion 77 is formed from a space surrounded by a cylindrical negative electrode collector 52.
One end of this fuel holding portion 77 is protruded to the outside, and a lid 78 is attached to the one end. Although not shown in the drawing, a plurality of fuel supply holes 52b are disposed all over the surface of the negative electrode collector 52 on the outside perimeter of the fuel holding portion 77. Moreover, the electrolyte layer 23 is in the shape of a bag enveloping the negative electrode 21 and the negative electrode collector 52. A portion between the electrolyte layer 23 and the negative electrode collector 52 at the one end of the fuel holding portion 77 is sealed with, for example, a seal member (not shown in the drawing) in such a way that the fuel do not leak from this portion to the outside.

In this biofuel cell, the fuel and the electrolyte are put into the fuel holding portion 77. These fuel and electrolyte reach the negative electrode 21 through the fuel supply holes 52b of the negative electrode collector 52 and are stored in the inside of this negative electrode 21 by permeating into a gap portion of this negative electrode 21. In order to increase the amount of fuel which can be stored in the inside of the negative electrode 21, it is desirable that the porosity of the negative electrode 21 is, for example, 60% or more, although not limited to this.

In this biofuel cell, gas-liquid separation layer may be disposed on the outside perimeter surface of the positive electrode collector 51 in order to improve the durability. As for the material for this gas-liquid separation layer, for example, a waterproof, moisture-resistant material (composite material of a stretched film of polytetrafluoroethylene and a polyurethane polymer) (for example, GORE-TEX (trade name) produced by W.L. Gore & Associates, Inc.) is used. In order to uniformly adhere the various components to each other, it is favorable that elastic rubber (the shape of a band and the shape of a sheet are acceptable) having a network structure, through which the air from the outside can pass, is wrapped around the outside or the inside of this gas-liquid separation layer, so as to tighten the whole of the components of this biofuel cell.

This seventh embodiment is the same as the third and the fifth embodiments except those described above within the bounds of not impairing the features thereof.

According to this seventh embodiment, the same advantages as those in the third and the fifth embodiments can be obtained.

Next, a biofuel cell according to an eighth embodiment of the present invention will be described.

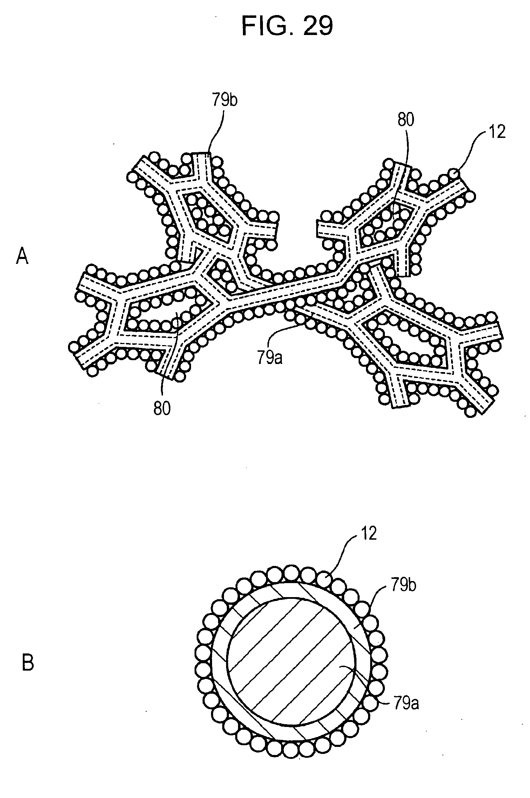

The biofuel cell according to this eighth embodiment has the same configuration as that of the biofuel cell according to the third embodiment except that a porous electrically conductive material as shown in Fig. 29 A and B is used for the electrode material of the negative electrode 21.

Fig. 29 A schematically shows the structure of this porous electrically conductive material, and Fig. 29 B is a sectional view of a skeleton portion of this porous electrically conductive material. As shown in Fig. 29 A and B, this porous electrically conductive material is composed of a skeleton 79a formed from a porous material having a three-dimensional network structure and a carbon based material 79b covering the surface of this skeleton 79a. The liposomes 12, which are the same as those in the third embodiment, are immobilized on the surface of this carbon based material 79b. This porous electrically conductive material has a three-dimensional network structure in which many pores 80 surrounded by the carbon based material 79b correspond to the network. In this case, these pores 80 are communicated with each other. The form of the carbon based material 79b does not matter, and may be any one of the shape of a fiber (the shape of a needle), the shape of a particle, and the like.

As for the skeleton 79a formed from the porous material, a foam metal or a foam alloy, for example, foam nickel is used. In general, the porosity of this skeleton 79a is 85% or more, or 90% or more. In general, the pore diameter thereof is, for example, 10 nm to 1 mm, or 10 nm to 600 µm, or 1 to 600 µm, typically 50 to 300 µm, and more typically 100 to 250 µm. As for the carbon based material 79b, highly electrically conductive materials, e.g., Ketjen Black, are preferable. However, functional carbon materials, e.g., carbon nanotube and fullerene, may be used.

In general, the porosity of this porous electrically conductive material is 80% or more, or 90% or more. In general, the diameter of the pore 80 is, for example, 9 nm to 1 mm, or 9 nm to 600 µm, or 1 to 600 µm, typically 30 to 400 µm, and more typically 80 to 230 µm.

Next, the method for manufacturing this porous electrically conductive material will be described.

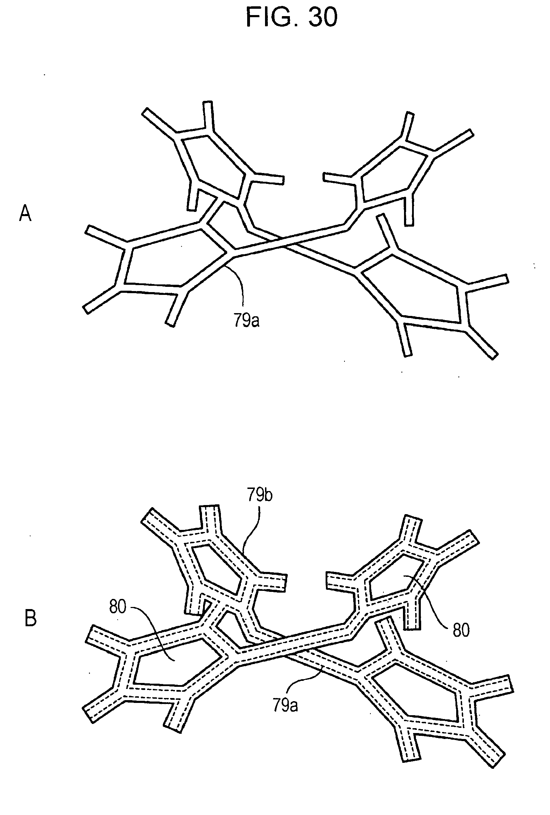

As shown in Fig. 30 A, initially, the skeleton 79a formed from a foam metal or a foam alloy (for example, foam nickel) is prepared.

Subsequently, as shown in Fig. 30 B, the surface of this skeleton 79a formed from a foam metal or a foam alloy is coated with the carbon based material 79b. As for this coating method, a previously known method can be used. In one example, the carbon based material 79b is applied by spraying an emulsion containing a carbon powder, an appropriate binder, and the like on the surface of the skeleton 79a with a spray. The thickness of the coating of this carbon based material 79b is determined in accordance with the porosity and the pore diameter required of the porous electrically conductive material in consideration of the porosity and the pore diameter of the skeleton 79a formed from a foam metal or a foam alloy. In the coating, many pores 80 surrounded by the carbon based material 79b are communicated with each other.

In this manner, the desired porous electrically conductive material is produced. Thereafter, liposomes 12 are immobilized on the surface of the carbon based material 79b of this porous electrically conductive material.

The manufacturing method is the same as that in the third embodiment except those described above.

According to this eighth embodiment, the following advantages can be obtained in addition to the same advantages as those in the third embodiment. That is, the porous electrically conductive material, in which the surface of the skeleton 79a formed from a foam metal or a foam alloy is covered with the carbon based material 79b, has a sufficiently large diameter of the pore 80, has high strength and high electrical conductivity while having a coarse three-dimensional network structure, and can obtain a necessary and sufficient surface area. Therefore, the negative electrode 21 composed of enzyme/coenzyme/electron mediator immobilization electrode produced by using this porous electrically conductive material as the electrode material and immobilizing the enzyme, the coenzyme, and the electron mediator thereon can effect the enzyme metabolic reaction thereon with high efficiency or catch an occurrence of the enzyme reaction phenomenon in the vicinity of the electrode as electric signals efficiently, and furthermore, a high-performance biofuel cell, which is stable regardless of use environment, can be realized.

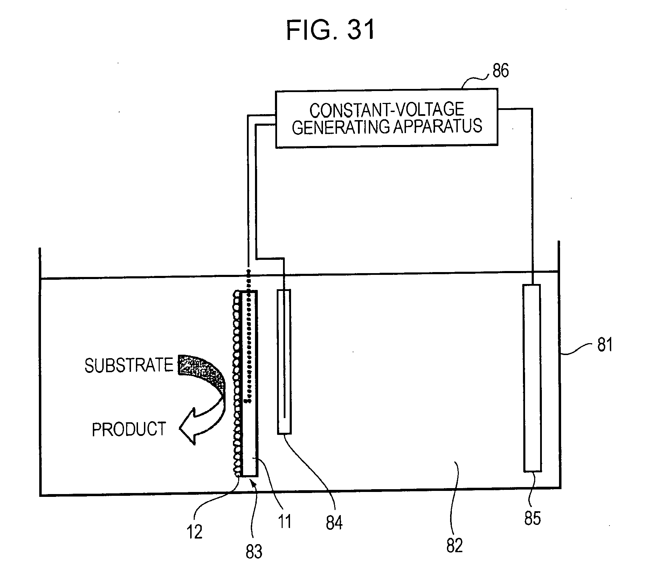

Next, a bioreactor according to a ninth embodiment of the present invention will be described. This bioreactor includes the enzyme immobilization electrode according to the first or the second embodiment. Fig. 31 shows this bioreactor.

As shown in Fig. 31, in this bioreactor, a reaction solution 82 is put in a reaction container 81, and a working electrode 83, a reference electrode 84, and a counter electrode 85 are immersed therein. As for the working electrode 83, the enzyme immobilization electrode according to the first or the second embodiment is used. A constant-voltage generating apparatus 86 is connected between the reference electrode 84 and the counter electrode 85 and, thereby, the reference electrode 84 is maintained at a constant voltage. The working electrode 83 is connected to a terminal, to which the reference electrode 84 of the constant-voltage generating apparatus 86 is connected.

In this bioreactor, a substrate (for example, alcohol, glucose, or the like) is fed to the working electrode 83 and the enzyme reaction is effected, so as to generate a desired product.

According to this ninth embodiment, the enzyme immobilization electrode, in which the liposome 12 encapsulating the enzyme group and the coenzyme required for the enzyme reaction therein is immobilized on the electrode 11, is used. Consequently, the enzyme reaction can be effected efficiently while a minute space in the inside of the liposome 12 serves as a reaction field, so that a desired product can be obtained efficiently. In addition, immobilization can be performed easily as compared with that in the case where the enzyme or the like is immobilized directly on the electrode 11 by a polyion complex or the like. Since the enzyme immobilization electrode used as the electrode exhibits high efficiency, as described above, a high-efficiency bioreactor can be realized. In this regard, in the case where it is required to use at least three types of enzymes, such a requirement can be satisfied by encapsulating at least three types of enzymes in the inside of the liposome 12.

Up to this point, the embodiments according to the present invention has been explained specifically. However, the present invention is not limited to the above-described embodiments, and various modifications can be made on the basis of the technical idea of the present invention.

For example, the numerical values, the structures, the configurations, the shapes, the materials, and the like mentioned in the above-described embodiments are no more than examples, and numerical values, structures, configurations, shapes, materials, and the like different therefrom may be employed as necessary. Furthermore, at least any two of the fourth to the eighth embodiments may be combined, as necessary. Reference Signs List

- 11: electrode
- 12: liposome
- 13, 14: enzyme
- 15: coenzyme
- 16: transporter
- 21: negative electrode
- 22: positive electrode
- 23: electrolyte layer
- 41, 42: Ti current collector
- 43, 44: clamping plate
- 47: load

## Claims

1. A fuel cell comprising a structure in which a positive electrode and a negative electrode are opposed with a proton conductor therebetween and being configured to take electrons out of a fuel by using an enzyme and a coenzyme,
wherein at least one type of the enzyme and at least one type of the coenzyme are encapsulated in a liposome.

2. The fuel cell according to Claim 1, wherein the liposome is immobilized on the negative electrode.

3. The fuel cell according to Claim 2, wherein an electron mediator is immobilized on the negative electrode.

4. The fuel cell according to Claim 3, wherein the enzyme comprises an oxidation enzyme which facilitates oxidation of the fuel so as to decompose.

5. The fuel cell according to Claim 4, wherein the enzyme comprises a coenzyme-oxidizing enzyme which returns the coenzyme reduced along with oxidation of the fuel to an oxidized form and, in addition, which passes electrons to the negative electrode through the electron mediator.

6. The fuel cell according to Claim 5, wherein the oxidized form of the coenzyme is NAD⁺ and the coenzyme-oxidizing enzyme is diaphorase.

7. The fuel cell according to Claim 6, wherein the oxidation enzyme is NAD-dependent alcohol dehydrogenase.

8. The fuel cell according to Claim 7, wherein the proton conductor is formed from an electrolyte comprising a compound containing an imidazole ring as a buffer substance.

9. The fuel cell according to Claim 8, wherein at least one type of acid selected from the group consisting of hydrochloric acid, acetic acid, phosphoric acid, and sulfuric acid is added to the compound containing an imidazole ring.

10. The fuel cell according to Claim 3, wherein the enzyme comprises an oxidation enzyme which facilitates oxidation of a monosaccharide so as to decompose.

11. The fuel cell according to Claim 10, wherein the enzyme comprises a coenzyme-oxidizing enzyme which returns the coenzyme reduced along with oxidation of the monosaccharide to an oxidized form and, in addition, which passes electrons to the negative electrode through the electron mediator.

12. The fuel cell according to Claim 11, wherein the oxidized form of the coenzyme is NAD⁺ and the coenzyme-oxidizing enzyme is diaphorase.

13. The fuel cell according to Claim 12, wherein the oxidation enzyme is NAD-dependent glucose dehydrogenase.

14. The fuel cell according to Claim 13, wherein a glucose transporter is incorporated in a lipid double layer constituting the liposome.

15. The fuel cell according to Claim 3, wherein the enzyme comprises a decomposition enzyme, which is incorporated or immobilized in a lipid double layer constituting the liposome or present in the outside of the liposome and which facilitate decomposition of a polysaccharide so as to generate a monosaccharide, and an oxidation enzyme which facilitate oxidation of the resulting monosaccharide so as to decompose.

16. The fuel cell according to Claim 15, wherein the decomposition enzyme is glucoamylase and the oxidation enzyme is NAD-dependent glucose dehydrogenase.

17. A method for manufacturing a fuel cell having a structure in which a positive electrode and a negative electrode are opposed with a proton conductor therebetween and taking electrons out of a fuel by using an enzyme and a coenzyme, the method comprising the step of encapsulating at least one type of the enzyme and at least one type of the coenzyme in a liposome.

18. An electronic apparatus comprising:
at least one fuel cell,
wherein at least one of the fuel cell
has a structure in which a positive electrode and a negative electrode are opposed with a proton conductor therebetween and is configured to take electrons out of a fuel by using an enzyme and a coenzyme, and
at least one type of the enzyme and at least one type of the coenzyme are encapsulated in a liposome.

19. An enzyme immobilization electrode, wherein a liposome encapsulating at least one type of enzyme and at least one type of coenzyme therein is immobilized.

20. A biosensor,
wherein an enzyme and a coenzyme are used and
at least one type of the enzyme and at least one type of the coenzyme are encapsulated in a liposome.

21. A bioreactor,
wherein an enzyme and a coenzyme are used and
at least one type of the enzyme and at least one type of the coenzyme are encapsulated in a liposome.

22. An energy conversion element, wherein a liposome encapsulating at least one type of enzyme and at least one type of coenzyme therein is used.

23. An enzyme reaction-utilizing apparatus,
wherein an enzyme and a coenzyme are used and
at least one type of enzyme and at least one type of coenzyme are encapsulated in a liposome.
